(19)

Europäisches
Patentamt
European
Patent Office
Office européen
des brevets

(11) **EP 4 388 884 A1**

(12) **EUROPEAN PATENT APPLICATION**

(43) Date of publication:
**26.06.2024  Bulletin 2024/26**

(21) Application number: **22216050.9**

(22) Date of filing: **22.12.2022**

(51) International Patent Classification (IPC):
***A23G 1/40*** *(2006.01)*

(52) Cooperative Patent Classification (CPC):
**A23G 1/40; A23G 1/0033; A23G 1/0036**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Chocoladefabriken Lindt & Sprüngli AG**
**8802 Kilchberg (CH)**

(72) Inventors:
• **Droz, Pascal**
  **8038 Zürich (CH)**

• **Reissig, Tina**
  **50937 Köln (DE)**
• **Schiffer, Katja**
  **52441 Linnich (DE)**
• **Gilgenbach, Gaby**
  **53919 Weilerwist (DE)**
• **Cavegn, Anita**
  **8800 Thalwil (CH)**
• **Schmid, Stefan**
  **6300 Zug (CH)**

(74) Representative: **E. Blum & Co. AG**
**Franklinturm**
**Hofwiesenstrasse 349**
**8050 Zürich (CH)**

(54) **METHOD FOR MANUFACTURE OF A CONFECTIONARY PRODUCT**

(57)    The present disclosure relates to a method for manufacture of a confectionary product comprising the steps of providing at least one sweetener, providing at least one ingredient from a cocoa bean selected from the group consisting of cocoa mass, cocoa butter, cocoa powder, and mixtures thereof, and mixing the components, as well as a confectionary product obtained by said method.

EP 4 388 884 A1

## Description

### Technical field

The present disclosure relates to a method of manufacturing of confectionary products, in particular to a method of manufacturing of confectionary products comprising at least one sweetener, and confectionary products obtained by the method of manufacturing.

### Background

One of the main challenges in the production of high-quality confectionary products, such as high quality chocolates, is the prevention of the formation of agglomerates during the method for manufacture. If such agglomerates are formed, the organoleptic properties of the chocolate, such as taste and mouthfeel, in particular, are changed to the worse to a dramatic extent. In such case, the batches of reduced quality have to be discarded or further processed which is associated with increased costs and effort for the manufacturer.

It is known in the prior art, that the tendency to form large agglomerates, also called 'grit', during the manufacture of chocolate is induced by the water content of the raw chocolate mass and its ingredients, as well as high temperatures during manufacturing. However, further difficulties in the manufacture are frequently encountered when amorphous and/or highly hygroscopic ingredients are included in the formulation of confectionary products such as chocolate.

Tscheuschner, H.-D.; et al. (in Zucker- und Süßwarenwirtschaft, 1993, 46(12), pages 580-583) have confirmed that the formation of grit in a chocolate composition, in particular during the process of conching in chocolate manufacture, is a complex process, for which the water content and the presence of amorphous sugars, such as amorphous lactose, are major risk factors and hence should be avoided. From a mechanistic point of view, the authors found that aggregate and grit formation occurs when moisture and amorphous substances come into contact and other hydrophilic solid components combine with the dissolved sugar. Initially, soft aggregates are formed, which can be dissolved by sufficiently high shear forces. If dissolution by shear forces does not occur, said soft aggregates solidify, e.g. by crystallization, under the release of moisture. Therefore, care must be taken during conching to ensure that the moisture contained in the chocolate composition is quickly removed, to avoid the formation of agglomerates and other grit-forming effects. If the free moisture cannot be sufficiently removed, it is absorbed by amorphous substances, e.g. amorphous lactose, and thus becomes the starting point for the further aggregation of hydrophilic solid components of the chocolate mass.

In other words, the crystallization of amorphous substances results in a release of moisture into the chocolate composition while being conched or during storage which sets off a vicious circle of grit formation causing moisture release causing further grit formation.

Therefore, chocolate manufacturers frequently avoid the use of ingredients having an amorphous structure or hygroscopic properties and/or take measures to reduce the moisture in the process to avoid the formation of grit. The latter is achieved by applying high requirements to the ingredients of the formulation, and excluding moisture from air, e.g. by switching off the active aeration during conching, for the entire process of manufacture, and using only short storage times. On the down-side, such process control is associated with high costs for the development of such process, the ingredients and customer-modified machines, special training of the plant managers as well as a deterioration of the taste of the confectionary products produced by such process.

The inventors of the present disclosure have now surprisingly found a process of manufacture of confectionary products that allows to incorporate amorphous sweeteners and other hygroscopic substances into confectionary products in a convenient manner using standard machinery during the manufacture of confectionary products. Therefore, the manufacture of confectionary products comprising amorphous substances, such as amorphous sweeteners, and other hygroscopic ingredients can not only be performed time and cost efficiently but also results in high quality confectionary products with improved taste and mouthfeel.

### Short summary of the disclosure

There is still a need to provide methods for the manufacture of confectionary products using ingredients, in particular sweeteners, which cannot be easily crystallized but exhibit a high portion of amorphous phases. In particular, there is a need for methods of handling the confectionary compositions containing the amorphous sweeteners during the different steps of manufacture in order to avoid the inherent risk of grit formation and on the other hand to improve the taste of the confectionary products at the same time. Such manufacturing method offers great possibilities for the preparation of confectionary products having new flavors and/or (calorie reduced and/or amorphous) sweeteners.

It has been found out surprisingly, that confectionary products comprising amorphous sweeteners can not only be manufactured in a time and cost-efficient way but also results in high quality confectionary products with improved taste and mouthfeel.

The present disclosure relates to a method for manufacture of a confectionary product comprising the steps of

i) Providing at least one sweetener,
ii) Providing at least one ingredient from a cocoa bean selected from the group consisting of cocoa mass, cocoa butter, cocoa powder and mixtures thereof; and
iii) Mixing components from i) and ii) to form a composition I.

In a further aspect, the present disclosure relates to a confectionary product obtained by a method according to the present disclosure.

**Detailed Description**

The present disclosure and the scope thereof is defined by the appended claims. The more generic description of the disclosure is provided for illustrative purposes only.

The present disclosure relates to a method for manufacture of a confectionary product comprising the steps of

i) Providing at least one sweetener,
ii) Providing at least one ingredient from a cocoa bean selected from the group consisting of cocoa mass, cocoa butter, cocoa powder and mixtures thereof; and
iii) Mixing components from i) and ii) to form a composition I.

In a further aspect, the present disclosure relates to a confectionary product obtained by a method according to the present disclosure.

It has been surprisingly found that confectionary products, in particular confectionary products comprising amorphous substances, manufactured by means of the method for manufacture according to the present disclosure can be produced in a time and cost efficient way using established methods and but also have high quality with improved taste and mouthfeel without the formation of agglomerates and/or grit.

The at least one sweetener

According to the disclosure, the method for the manufacture of a confectionary product comprises two steps i) and ii), that are providing at least one sweetener and providing at least one ingredient from a cocoa fruit selected from the group consisting of cocoa mass, cocoa butter, cocoa powder and mixtures thereof, respectively.

According to one embodiment of the method for manufacture of the present disclosure, step i) is providing at least one sweetener.

In step i) of the method of manufacture according to the present disclosure, providing at least one sweetener means providing at least one sweetener as defined in the following:

According to a preferred embodiment of the present disclosure, the at least one sweetener is a sweetener derived from the cocoa fruit.

According to a further preferred embodiment of the present disclosure, the at least one sweetener is Allulose.

According to a further preferred embodiment of the present disclosure, the at least one sweetener is polydextrose.

According to a further preferred embodiment of the present disclosure, the at least one sweetener is a maltodextrin, such as soluble corn fiber.

According to a further preferred embodiment of the present disclosure, the at least one sweetener is a super sweetener.

According to a further preferred embodiment of the present disclosure, the at least one sweetener is a mixture of two or more sweeteners as defined herein above. According to a further preferred embodiment of the present disclosure, the at least one sweetener is a mixture of a sweetener derived from the cocoa fruit and polydextrose. According to a further preferred embodiment of the present disclosure, the at least one sweetener is a mixture of a sweetener derived from the cocoa fruit and Allulose. According to a further preferred embodiment of the present disclosure, the at least one sweetener is a mixture of a sweetener derived from the cocoa fruit and a super sweetener. According to a further preferred embodiment of the present disclosure, the at least one sweetener is a mixture of a sweetener derived from the cocoa fruit and maltodextrin, such as soluble corn fiber. According to a further preferred embodiment of the present disclosure, the at least one sweetener is a mixture of Allulose and polydextrose. According to a further preferred embodiment of the present disclosure, the at least one sweetener is a mixture of Allulose and a super sweetener. According to a further preferred embodiment of the present disclosure, the at least one sweetener is a mixture of Allulose and soluble corn fiber. According to a further preferred embodiment of the present disclosure, the at least one sweetener is a mixture of polydextrose and soluble corn fiber. According to a further preferred embodiment of the present disclosure, the at least one sweetener is a mixture of polydextrose and a super sweetener. According to a further preferred embodiment of the present disclosure, the at least one sweetener is a mixture of a sweetener derived from the cocoa fruit, Allulose, and polydextrose. According to a further preferred embodiment of the present disclosure, the at least one sweetener is a mixture of a sweetener derived from the cocoa fruit, Allulose, and soluble corn fiber. According to a further preferred embodiment of the present disclosure, the at least one sweetener is a mixture of a sweetener derived from the cocoa fruit, Allulose, and a super sweetener. According to a further preferred embodiment of the present disclosure, the at least one sweetener is a mixture of a sweetener derived from the cocoa fruit, Allulose, polydextrose, and soluble corn fiber. According to a further preferred embodiment of the present disclosure, the at least one sweetener is a mixture of a sweetener derived from the cocoa fruit, Allulose, polydextrose, and a super sweetener. According to a further preferred embodiment of the present disclosure, the at least one sweetener is a mixture of a sweetener derived from the cocoa fruit, Allulose, polydextrose, soluble corn fiber and a super sweetener.

According to one embodiment, a super sweetener is a polyol. According to a further preferred embodiment of the present disclosure, the at least one sweetener is a super sweetener, wherein the super sweetener is maltitol. According to a further preferred embodiment of the present disclosure, the at least one sweetener is a super sweetener, wherein the super sweetener is erythritol. According to a further preferred embodiment of the present disclosure, the at least one sweetener is a super sweetener, wherein the super sweetener is xylitol. According to a further preferred embodiment of the present disclosure, the at least one sweetener is a super sweetener, wherein the super sweetener is sorbitol.

As used herein, the term "polyol" is a compound that contains at least two hydroxyl groups, preferably four, five or six hydroxyl groups. In a preferred embodiment, one hydroxyl group attached to each carbon atom in a compound in question.

As used herein, the term "soluble corn fiber" refers to a digestion resistant maltodextrin which is typically a powder produced controlled enzymatic hydrolysis of starch, such as cornstarch, and dried by spray-drying, freeze drying or roller drying. On a molecular level, soluble corn fiber has numerous starch linkages that remain undigested by enzymes of the human digestive tract. An example of such a soluble corn fiber is Fibersol®.

As used herein, the term "polydextrose" is a synthetic polymer of glucose, also known as E1200. It is a food ingredient classified as soluble fiber by the U.S. Food and Drug Administration (FDA) as well as Health Canada, as of April 2013. It is frequently used to increase the dietary fiber content of food, to replace sugar, and to reduce calories and fat content. It is a multi-purpose food ingredient synthesized from dextrose (glucose), plus about 10 percent sorbitol and 1 percent citric acid.

As used herein, the term "allulose" refers to a low-calorie epimer of the monosaccharide sugar fructose, which is also known as psicose or CAS number 551-68-8.

As used herein, the term "sweetener derived from the cocoa fruit" refers to a substance having a sweet taste and which can be prepared from any part of the cocoa fruit.

According to a preferred embodiment of the present disclosure, a sweetener derived from the cocoa fruit is derived from or comprises the pulp of a cocoa fruit.

As used herein, the terms "pulp of a cocoa fruit" and "cocoa pulp" are used interchangeably and are defined as the white, sticky and fleshy substance that surrounds the cocoa beans inside the cocoa pod.

According to a preferred embodiment of the present disclosure, the sweetener derived from the cocoa fruit is derived from the pulp of a cocoa fruit, wherein the sweetener derived from the cocoa fruit is prepared by opening the cocoa fruit, separating the cocoa pulp from the cocoa husk and the cocoa beans, and drying the cocoa pulp to yield a sweetener derived from the cocoa fruit. According to a preferred embodiment of the present disclosure, drying the cocoa pulp is performed by spray drying. According to a further preferred embodiment of the present disclosure, drying the cocoa pulp is performed by roller drying. According to a further preferred embodiment of the present disclosure, drying the cocoa pulp is performed by freeze drying. As used herein, the sweetener derived from the cocoa fruit prepared by the foregoing means is also referred to as "pulp sugar". In other words, the term "pulp sugar" as used herein relates to a sweetener derived from the cocoa fruit which is prepared by a method comprising the steps of opening the cocoa fruit, separating the cocoa pulp from the cocoa husk and the cocoa beans, and drying the cocoa pulp. According to a preferred embodiment of the present disclosure, drying the cocoa pulp is performed by spray drying. According to a further preferred embodiment of the present disclosure, drying the cocoa pulp is performed by roller drying. According to a further preferred embodiment of the present disclosure, drying the cocoa pulp is performed by freeze drying.

According to another preferred embodiment of the present disclosure, the at least one sweetener is a pulp sugar. According to a further preferred embodiment according to the present disclosure, the sweetener derived from a cocoa fruit is a pulp sugar.

According to a preferred embodiment of the present disclosure, the at least one sweetener is an amorphous sweetener.

As used herein, the term "amorphous" relates to a solid which is non-crystalline and hence lacks a long-range order, which is a characteristic of a crystal or "crystalline sweetener" as used herein. It is understood that an amorphous sweetener may be transformed into a crystalline sweetener under the influence of moisture. Without being bound by theory, a phase transfer of an amorphous sweetener may occur, when the amorphous sweetener dissolves and then crystallizes again under release of moisture. Such crystals then act as seed crystals, promoting the crystallization of further molecules of the amorphous sweetener. Thus, large crystals/agglomerates/grit is formed. In other words, amorphous substances, in particular amorphous sweeteners are prone to crystallization, agglomeration, and grit forming upon contact with moisture.

As used herein, the term "amorphous sweetener" relates to a sweetener which has a high content of amorphous phase. In other words, an amorphous sweetener has a low content of crystalline phase. According to a preferred embodiment of the present disclosure the amorphous sweetener comprises at least 50 wt.-% of amorphous phase based on the total weight of the amorphous sweetener. According to a preferred embodiment of the present disclosure the amorphous sweetener comprises at least 60 wt.-% of amorphous phase based on the total weight of the amorphous sweetener. According to a further preferred embodiment of the present disclosure the amorphous sweetener comprises at least 70 wt.-% of amorphous phase based on the total weight of the amorphous sweetener. According to a preferred embodiment of the present disclosure the amorphous sweetener comprises at least 80 wt.-% of amorphous phase based on the total weight of the amorphous sweetener. According to a preferred embodiment of the present disclosure the amorphous sweetener comprises at least 90 wt.-% of amorphous phase based on the total weight of the amorphous sweetener. According to a preferred embodiment of the present disclosure the amorphous sweetener comprises at least 95 wt.-% of amorphous phase based on the total weight of the amorphous sweetener.

According to a preferred embodiment of the present disclosure, the amorphous sweetener is a sweetener derived from a cocoa fruit. According to a more preferred embodiment of the present disclosure, the amorphous sweetener is a pulp sugar.

According to a preferred embodiment of the present disclosure, the at least one sweetener has an average particle size $D_{50}$ of at least 0.1 mm. According to a further preferred embodiment of the present disclosure, the at least one sweetener has an average particle size $D_{50}$ of at least 0.5 mm. According to a further preferred embodiment of the present disclosure, the at least one sweetener has an average particle size $D_{50}$ of at least 1.0 mm. According to a further preferred embodiment of the present disclosure, the at least one sweetener has an average particle size $D_{50}$ of at least 2.0 mm. According to a further preferred embodiment of the present disclosure, the at least one sweetener has an average particle size $D_{50}$ of at least 3.0 mm. According to a further preferred embodiment of the present disclosure, the at least one sweetener has an average particle size $D_{50}$ of at least 4.0 mm.

According to a preferred embodiment of the present disclosure, the at least one sweetener has an average particle size $D_{50}$ in the range of from about 0.1 mm to about 10 mm. According to a further preferred embodiment of the present disclosure, the at least one sweetener has an average particle size $D_{50}$ in the range of from about 0.5 mm to about 8 mm. According to a further preferred embodiment of the present disclosure, the at least one sweetener has an average particle size $D_{50}$ in the range of from about 1 mm to about 7 mm. According to a further preferred embodiment of the present disclosure, the at least one sweetener has an average particle size $D_{50}$ in the range of from about 2 mm to about 6 mm. According to a further preferred embodiment of the present disclosure, the at least one sweetener has an average particle size $D_{50}$ in the range of from about 3 mm to about 6 mm. According to a further preferred embodiment of the present disclosure, the at least one sweetener has an average particle size $D_{50}$ in the range of from about 4 mm to about 6 mm. According to a further preferred embodiment of the present disclosure, the at least one sweetener has an average particle size $D_{50}$ in the range of from about 4 mm to about 5 mm.

According to another preferred embodiment of the present disclosure, the at least one sweetener has a maximum particle diameter $D_{100}$ of $\leq$ 20 mm. According to a further preferred embodiment of the present disclosure, the at least one sweetener has a maximum particle diameter $D_{100} \leq$ 15 mm. According to a further preferred embodiment of the present disclosure, the at least one sweetener has a maximum particle diameter $D_{100} \leq$ 12 mm. According to a further preferred embodiment of the present disclosure, the at least one sweetener has a maximum particle diameter $D_{100}$ 10 mm. According to a further preferred embodiment of the present disclosure, the at least one sweetener has a maximum particle diameter $D_{100} \leq$ 9 mm. According to a further preferred embodiment of the present disclosure, the at least one sweetener has a maximum particle diameter $D_{100} \leq$ 8 mm. According to a further preferred embodiment of the present disclosure, the at least one sweetener has a maximum particle diameter $D_{100} \leq$ 7 mm. According to a further preferred embodiment of the present disclosure, the at least one sweetener has a maximum particle diameter $D_{100} \leq$ 6 mm.

According to another preferred embodiment of the present disclosure, the at least one sweetener has a maximum particle diameter $D_{100}$ in the range of from about 3 mm to about 20 mm. According to a further preferred embodiment of the present disclosure, the at least one sweetener has a maximum particle diameter $D_{100}$ in the range of from about 3 mm to about 15 mm. According to a further preferred embodiment of the present disclosure, the at least one sweetener has a maximum particle diameter $D_{100}$ in the range of from about 4 mm to about 12 mm. According to a further preferred embodiment of the present disclosure, the at least one sweetener has a maximum particle diameter $D_{100}$ in the range of from about 5 mm to about 10 mm. According to a further preferred embodiment of the present disclosure, the at least one sweetener has a maximum particle diameter $D_{100}$ in the range of from about 5 mm to about 9 mm. According to a further preferred embodiment of the present disclosure, the at least one sweetener has a maximum particle diameter $D_{100}$ in the range of from about 5 mm to about 8 mm. According to a further preferred embodiment of the present disclosure, the at least one sweetener has a maximum particle diameter $D_{100}$ in the range of from about 5 mm to about 7 mm.

According to another preferred embodiment of the present disclosure, the at least one sweetener has an average particle diameter $D_{50}$ of at least 1.0 mm and a maximum particle diameter $D_{100}$ of $\leq$ 12 mm. According to a further preferred embodiment of the present disclosure, the at least one sweetener has an average particle diameter $D_{50}$ of at least 2.0 mm and a maximum particle diameter $D_{100}$ of $\leq$ 10 mm. According to another preferred embodiment of the present disclosure, the at least one sweetener has an average particle diameter $D_{50}$ of at least 3.0 mm and a maximum particle diameter $D_{100}$ of $\leq$ 9 mm.

According to another preferred embodiment of the present disclosure, the at least one sweetener has a water content of at most 10 wt.-% based on the total weight of the at least one sweetener. According to a further preferred embodiment of the present disclosure, the at least one sweetener has a water content of at most 8 wt.-% based on the total weight of the at least one sweetener. According to a further preferred embodiment of the present disclosure, the at least one sweetener has a water content of at most 6 wt.-% based on the total weight of the at least one sweetener. According to a further preferred embodiment of the present disclosure, the at least one sweetener has a water content of at most 4 wt.-% based on the total weight of the at least one sweetener. According to a further preferred embodiment of the present disclosure, the at least one sweetener has a water content of at most 3 wt.-% based on the total weight of the at least one sweetener. According to a further preferred embodiment of the present disclosure, the at least one sweetener has a water content of at most 2 wt.-% based on the total weight of the at least one sweetener. According to a further preferred embodiment of the present disclosure, the at least one sweetener has a water content of at most 1.5 wt.-% based on the total weight of the at least one sweetener. According to a further preferred embodiment of the present disclosure, the at least one sweetener has a water content of at most 1 wt.-% based on the total weight of the at least one sweetener. According to a further preferred embodiment of the present disclosure, the at least one sweetener has a water content of at most 0.8 wt.-% based on the total weight of the at least one sweetener. According to a further preferred embodiment of the present disclosure, the at least one sweetener has a water content of at most 0.6 wt.-% based on the total weight of the at least one sweetener. According to a further preferred embodiment of the present disclosure, the at least one sweetener has a water content of at most 0.5 wt.-% based on the total weight of the at least one sweetener.

According to another preferred embodiment of the present disclosure, the water content is determined by a vacuum method (OICCC) at 70 °C.

According to another preferred embodiment of the present disclosure, the at least one sweetener is prepared by roller drying. According to another preferred embodiment of the present disclosure, the at least one sweetener is prepared by spray drying. According to another preferred embodiment of the present disclosure, the at least one sweetener is prepared by freeze drying. According to another preferred embodiment of the present disclosure, the at least one sweetener is prepared by vacuum drying.

According to another embodiment of the present disclosure, the at least one sweetener has hygroscopic properties. According to another preferred embodiment of the present disclosure, the at least one sweetener having hygroscopic properties is a sweetener derived from the cocoa fruit. According to another preferred embodiment of the present disclosure, the at least one sweetener having hygroscopic properties is a pulp sugar.

As used herein, the term "hygroscopic properties" means that the at least one sweetener, in particular the at least one amorphous sweetener, readily attracts and absorbs water from the surrounding environment at room temperature. Said water can be moisture/humidity of air. In other words, hygroscopic properties mean that the at least one sweetener, in particular the at least one amorphous sweetener, absorbs any moisture in the atmosphere which leads to a change in the physical properties. In particular, the at least one sweetener, in particular the at least one amorphous sweetener, is prone to crystallization, agglomeration, and/or grit forming when contacted with only small amounts of moisture.

Therefore, special care must be taken when working with sweeteners having hygroscopic properties. Said sweeteners require special conditions of storage and due care must be taken when such substances are being used in a method for manufacturing of a confectionary products. Therefore, there is an established prejudice in the field of food science that sweeteners having hygroscopic properties should not be used in the manufacture of confectionary products for their complicated handling and the inherently high risk of grit formation. In every case, it is common sense in the field that any contact to moisture during and after the manufacture must be at least reduced or even be avoided which may also include the exclusion of air during certain manufacturing steps.

To the contrary of the technical prejudice in the field of food science, the inventors of the present application have surprisingly found that the handling of sweeteners, in particular amorphous sweeteners and/or sweeteners having hygroscopic properties, is considerably simplified in that the sweetener does not crystallize, forms agglomerates or forms grit, when said sweetener is coated with a coating agent. The coating with a suitable coating agent can be performed before or during the manufacturing.

According to another preferred embodiment of the present disclosure, the at least one sweetener is coated with a coating agent. According to preferred embodiment of the present disclosure, the coating agent comprises cocoa powder. According to a further preferred embodiment of the present disclosure, the coating agent is cocoa powder.

According to another preferred embodiment of the present disclosure, the at least one sweetener is coated with a coating agent, wherein the coating agent is present in an amount of at least 2 wt.-% based on the total combined weight of the at least one sweetener and the coating agent. According to a further preferred embodiment of the present disclosure, the at least one sweetener is coated with a coating agent, wherein the coating agent is present in an amount of at least 4 wt.-% based on the total combined weight of the at least one sweetener and the coating agent. According to a further preferred embodiment of the present disclosure, the at least one sweetener is coated with a coating agent, wherein the coating agent is present in an amount of at least 6 wt.-% based on the total combined weight of the at least one sweetener and the coating agent. According to a further preferred embodiment of the present disclosure, the at least one sweetener is coated with a coating agent, wherein the coating agent is present in an amount of at least 8 wt.-% based on the total combined weight of the at least one sweetener and the coating agent. According to a further preferred embodiment of the present disclosure, the at least one sweetener is coated with a coating agent, wherein the coating agent is present in an amount of at least 10 wt.-% based on the total combined weight of the at least one sweetener and the coating agent.

According to another preferred embodiment of the present disclosure, the at least one sweetener is coated with a coating agent, wherein the coating agent is present in an amount of from about 2 wt.-% to about 20 wt.-% based on the total combined weight of the at least one sweetener and the coating agent. According to a further preferred embodiment of the present disclosure, the at least one sweetener is coated with a coating agent, wherein the coating agent is present in an amount of from about 4 wt.-% to about 18 wt.-% based on the total combined weight of the at least one sweetener and the coating agent. According to a further preferred embodiment of the present disclosure, the at least one sweetener is coated with a coating agent, wherein the coating agent is present in an amount of from about 6 wt.-% to about 17 wt.-% based on the total combined weight of the at least one sweetener and the coating agent. According to a further preferred embodiment of the present disclosure, the at least one sweetener is coated with a coating agent, wherein the coating agent is present in an amount of from about 8 wt.-% to about 16 wt.-% based on the total combined weight of the at least one sweetener and the coating agent. According to a further preferred embodiment of the present disclosure, the at least one sweetener is coated with a coating agent, wherein the coating agent is present in an amount of from about 8 wt.-% to about 15 wt.-% based on the total combined weight of the at least one sweetener and the coating agent. According to a further preferred embodiment of the present disclosure, the at least one sweetener is coated with a coating agent, wherein the coating agent is present in an amount of from about 10 wt.-% to about 15 wt.-% based on the total combined weight of the at least one sweetener and the coating agent. According to a further preferred embodiment of the present disclosure, the at least one sweetener is coated with a coating agent, wherein the coating agent is present in an amount of about 10 wt.-% based on the total combined weight of the at least one sweetener and the coating agent. According to a further preferred embodiment of the present disclosure, the at least one sweetener is coated with a coating agent, wherein the coating agent is present in an amount of about 15 wt.-% based on the total combined weight of the at least one sweetener and the coating agent.

According to another preferred embodiment of the present disclosure, the at least one sweetener is pulp sugar, and is coated with a coating agent, wherein the coating agent comprises cocoa powder, and wherein the coating agent is present in an amount of from about 2 wt.-% to about 20 wt.-% based on the total combined weight of the at least one sweetener and the coating agent. According to a further preferred embodiment of the present disclosure, the at least one sweetener is pulp sugar, and is coated with a coating agent, wherein the coating agent comprises cocoa powder, and wherein the coating agent is present in an amount of from about 5 wt.-% to about 20 wt.-% based on the total combined weight of the at least one sweetener and the coating agent. According to a further preferred embodiment of the present disclosure, the at least one sweetener is pulp sugar, and is coated with a coating agent, wherein the coating agent comprises cocoa powder, and wherein the coating agent is present in an amount of from about 6 wt.-% to about 17 wt.-% based on the total combined weight of the at least one sweetener and the coating agent. According to a further preferred embodiment of the present disclosure, the at least one sweetener is pulp sugar, and is coated with a coating agent, wherein the coating agent comprises cocoa powder, and wherein the coating agent is present in an amount of from about 8 wt.-% to about 16 wt.-% based on the total combined weight of the at least one sweetener and the coating agent. According to a further preferred embodiment of the present disclosure, the at least one sweetener is pulp sugar, and is coated with a coating agent, wherein the coating agent comprises cocoa powder, and wherein the coating agent is present in an amount of from about 8 wt.-% to about 15 wt.-% based on the total combined weight of the at least one sweetener and the coating agent. According to a further preferred embodiment of the present disclosure, the at least one sweetener is pulp sugar, and is coated with a coating agent, wherein the coating agent comprises cocoa powder, and, wherein the coating agent is present in an amount of from about 10 wt.-% to about 15 wt.-% based on the total combined weight of the at least one sweetener and the coating agent. According to a further preferred embodiment of the present disclosure, the at least one sweetener is pulp sugar, and is coated with a coating agent, wherein the coating agent comprises cocoa powder, and wherein the coating agent is present in an amount of about 10 wt.-% based on the total combined weight of the at least one sweetener and the coating agent. According to a further preferred embodiment of the present disclosure, the at least one sweetener is pulp sugar, and is coated with a coating agent, wherein the coating agent comprises cocoa powder, and wherein the coating agent is present in an amount of about 15 wt.-% based on the total combined weight of the at least one sweetener and the coating agent.

According to another preferred embodiment of the present disclosure, the at least one sweetener is pulp sugar, and is coated with a coating agent, wherein the coating agent is cocoa powder, and wherein the coating agent is present in an amount of from about 2 wt.-% to about 20 wt.-% based on the total combined weight of the at least one sweetener and the coating agent. According to a further preferred embodiment of the present disclosure, the at least one sweetener is pulp sugar, and is coated with a coating agent, wherein the coating agent is cocoa powder, and wherein the coating agent is present in an amount of from about 5 wt.-% to about 20 wt.-% based on the total combined weight of the at least one sweetener and the coating agent. According to a further preferred embodiment of the present disclosure, the at least one sweetener is pulp sugar, and is coated with a coating agent, wherein the coating agent is cocoa powder, and wherein the coating agent is present in an amount of from about 6 wt.-% to about 17 wt.-% based on the total combined weight of the at least one sweetener and the coating agent. According to a further preferred embodiment of the present disclosure, the at least one sweetener is pulp sugar, and is coated with a coating agent, wherein the coating agent is cocoa powder, and wherein the coating agent is present in an amount of from about 8 wt.-% to about 16 wt.-% based on the total combined weight of the at least one sweetener and the coating agent. According to a further preferred embodiment of the present disclosure, the at least one sweetener is pulp sugar, and is coated with a coating agent, wherein the coating agent is cocoa powder, and wherein the coating agent is present in an amount of from about 8 wt.-% to about 15 wt.-% based on the total combined weight of the at least one sweetener and the coating agent. According to a further preferred embodiment of the present disclosure, the at least one sweetener is pulp sugar, and is coated with a coating agent, wherein the coating agent is cocoa powder, and, wherein the coating agent is present in an amount of from about 10 wt.-% to about 15 wt.-% based on the total combined weight of the at least one sweetener and the coating agent. According to a further preferred embodiment of the present disclosure, the at least one sweetener is pulp sugar, and is coated with a coating agent, wherein the coating agent is cocoa powder, and wherein the coating agent is present in an amount of about 10 wt.-% based on the total combined weight of the at least one sweetener and the coating agent. According to a further preferred embodiment of the present disclosure, the at least one sweetener is pulp sugar, and is coated with a coating agent, wherein the coating agent is cocoa powder, and wherein the coating agent is present in an amount of about 15 wt.-% based on the total combined weight of the at least one sweetener and the coating agent.

Cocoa mass, cocoa butter, and cocoa powder

According to one embodiment of the method for manufacture of the present disclosure, step ii) is providing at least one ingredient from a cocoa bean selected from the group consisting of cocoa mass, cocoa butter, cocoa powder, and mixtures thereof.

In step ii) of the method of manufacture according to the present disclosure, providing at least one ingredient from a cocoa bean selected from the group consisting of cocoa mass, cocoa butter, cocoa powder and mixtures thereof means at least one ingredient from a cocoa bean selected from the group consisting of cocoa mass, cocoa butter, cocoa powder and mixtures thereof as defined in the following:

As used herein, the term "cocoa mass" is defined as the mass produced from cocoa beans by fermenting, drying, separating the beans from their skins, roasting, and grinding the cocoa beans to yield the cocoa mass. Cocoa mass is available from different commercial suppliers or may be prepared by common methods known in the art. In the sense of the present disclosure, the cocoa mass preferably has a content of fat of about 53 wt.-% based on the total weight of the cocoa mass with the remainder being carbohydrates, proteins, tannins, and theobromine.

As used herein, the term "cocoa butter" is defined as the edible fat extracted from the cocoa beans. In the sense of the present disclosure, cocoa butter is prepared by fermenting, drying, roasting, separating the beans from their skins, and grinding the cocoa beans to yield cocoa mass. Said cocoa mass is then pressed to separate the cocoa butter from the non-fat cocoa solids. Optionally, the cocoa butter may be deodorized to remove strong or undesirable tastes. Cocoa butter contains an amount of 100 wt.-% of fat based on the total weight of the cocoa butter. In other words, cocoa butter consists of fat. Cocoa butter contains a high proportion of saturated fatty acids as well as mono-unsaturated oleic acid, which typically occur in the form of triglycerides.

As used herein, the term "cocoa powder" is defined as the powdered form of dry non-fat cocoa solids obtained from the cocoa beans. In the sense of the present disclosure, cocoa powder is prepared by fermenting, drying, roasting, separating the beans from their skins, and grinding the cocoa beans into cocoa mass. Said cocoa mass is then pressed to separate the cocoa butter from the non-fat cocoa solids. The non-fat cocoa solids are then powdered to form cocoa powder. Optionally, the cocoa powder may be treated with an alkaline to neutralize its acids. Cocoa powder contains a remainder of cocoa butter and hence contains about 11 wt.-% of fat based on the total weight of the cocoa powder.

Mixing and composition I

According to the present disclosure, the method for the manufacture of a confectionary product comprises a step of mixing the components from steps i) and ii), that are the at least one sweetener and the at least one ingredient from a cocoa bean selected from the group consisting of cocoa mass, cocoa butter, cocoa powder, and mixtures thereof, to yield a composition I.

Mixing of the ingredients is a central step in the method for manufacture of a confectionary product according to the present disclosure. The step of mixing is carried out in an industrial mixer. The mixer is equipped with a stirrer which is adapted to distribute the components to result in an even distribution of the ingredients throughout the composition I thus obtained, in particular the at least one sweetener and the fat contained in the at least one ingredient from a cocoa bean.

Furthermore, the mixer comprises a dissolver which is adapted to crush particles, in particular particles of the at least one sweetener, into smaller particles to obtain a suspension of particles, in particular particles of the at least one sweetener, in a continuous fat phase provided by the at least one ingredient from a cocoa bean.

As used herein, the mixing step may also be referred to as step iii) or as "mixing".

According to a preferred embodiment of the present disclosure, step iii) comprises crushing of particles of the at least one sweetener. According to a further preferred embodiment of the present disclosure, step iii) comprises crushing of particles of the at least one sweetener, wherein the maximum particle size $D_{100}$ of the particles of the at least one sweetener is reduced by at least about 50 %. According to a further preferred embodiment of the present disclosure, step iii) comprises crushing of particles of the at least one sweetener, wherein the maximum particle size $D_{100}$ of the particles of the at least one sweetener is reduced by at least about 70 %. According to a further preferred embodiment of the present disclosure, step iii) comprises crushing of particles of the at least one sweetener, wherein the maximum particle size $D_{100}$ of the particles of the at least one sweetener is reduced by at least about 90 %. According to a further preferred embodiment of the present disclosure, step iii) comprises crushing of particles of the at least one sweetener, wherein the maximum particle size $D_{100}$ of the particles of the at least one sweetener is reduced by at least about 50 %, or by at least about 70 %, or by at least about 90 %; each relative to the maximum particle size $D_{100}$ of the particles of the at least one sweetener provided in step i).

It is understood that crushing of the particles, in particular crushing of the particles of the at least one sweetener, increases the surface of said particles. Therefore, the crushed particles can absorb moisture, such as moisture from the air, more rapidly and more easily. Therefore, the tendency for the formation of agglomerates and grit which is inextricably linked to the moisture content of the composition, such as composition I, is expected to increase dramatically upon crushing the particles. This may particularly be expected when the composition comprises particles of amorphous and/or otherwise hygroscopic sweeteners.

However, the inventors of the present disclosure found the opposite: Contrary to the expectation, no grit formation was found upon crushing the particles, in particular the particles of the at least one sweetener. This is particularly true when the fat content was as high as 10 wt.-% of fat or higher based on the entire weight of the composition I.

Without wishing to be bound by theory, it is hypothesized that the surface area created during crushing of the particles is covered with a layer of fat under the provision that the fat content of the composition is high. This was surprisingly found effective to prevent the moisture uptake and subsequent grit formation.

According to a preferred embodiment of the present disclosure, the composition I has a content of fat in a range of from about 10 wt.-% to about 50 wt.-% based on the total weight of the composition I. According to a further preferred embodiment of the present disclosure, the composition I has a content of fat in a range of from about 20 wt.-% to about 45 wt.-% based on the total weight of the composition I. According to a further preferred embodiment of the present disclosure, the composition I has a content of fat in a range of from about 25 wt.-% to about 40 wt.-% based on the total weight of the composition I. According to a further preferred embodiment of the present disclosure, the composition I has a content of fat in a range of from about 30 wt.-% to about 40 wt.-% based on the total weight of the composition I. According to a further preferred embodiment of the present disclosure, the composition I has a content of fat in a range of from about 32 wt.-% to about 37 wt.-% based on the total weight of the composition I. According to a further preferred embodiment of the present disclosure, the composition I has a content of fat in a range of from about 34 wt.-% to about 36 wt.-% based on the total weight of the composition I.

According to a further preferred embodiment of the present disclosure, the composition I has a content of fat in a range of from about 20 wt.-% to about 40 wt.-% based on the total weight of the composition I. According to a further preferred embodiment of the present disclosure, the composition I has a content of fat in a range of from about 22 wt.-% to about 35 wt.-% based on the total weight of the composition I. According to a further preferred embodiment of the present disclosure, the composition I has a content of fat in a range of from about 25 wt.-% to about 30 wt.-% based on the total weight of the composition I.

If the fat content exceeds 50 wt.-% based on the total weight of the composition I, the composition has low viscosity and is difficult to handle in subsequent steps. If the fat content is lower than 10 wt.-% based on the total weight of the composition I, the at least one sweetener contained in said composition I can readily and easily absorb moisture from the air which results in the formation of agglomerates and grit. Additionally, the composition I is too dry and cannot be refined.

Without wishing to be bound by theory, it is assumed that a high content of fat in the composition I leads to the effect that the surface formed during crushing of the particles is immediately coated with a layer of fat so that no moisture can be absorbed by the particles. Thus, the formation of agglomerates and grit can be successfully prevented.

According to another preferred embodiment of the present disclosure, the composition I does not comprise added refined sugar. As used herein, the term "added refined sugar" refers to sugar prepared form sugar cane or sugar beets or corn, which is processed to extract the sugar. As such, added refined sugars may typically be found as sucrose obtained from sugar can or sugar beets or corn, which is the combination of glucose and fructose. Furthermore, added refined sugars in the sense of the present disclosure are chemically produced sugar obtained from sugar cane or sugar beets or corn, such as high-fructose corn syrup. In other words, added refined sugars in the sense of the present disclosure are sugars obtained from sugar cane or sugar beets or corn that have been processed with any process other than drying.

In other word, according to a preferred embodiment of the present disclosure, the method for manufacturing of a confectionary product does not comprise a step of providing a refined sugar as defined herein. According to another preferred embodiment of the present disclosure, the method for manufacturing of a confectionary product does not comprise a step of adding a refined sugar as defined herein to composition I.

Pre-refining and composition II

In a preferred embodiment, the method for manufacture of a confectionary product according to the present disclosure further comprises a step of pre-refining the composition I obtained from step iii) to result a composition II. As used herein, the pre-refining step may also be referred to as step iv).

Generally, the pre-refining may be performed after the mixing step but before the refining and conching steps.

In the step of pre-refining, the composition I obtained from the step of mixing the components may be inserted into a pre-roller having two counter-rotating rollers. In the step of pre-refining, any coarse solid components of the composition I are crushed into particles of from about 50 $\mu$m to about 200 $\mu$m in size. The size of particles is mainly determined by the pressure applied to the two counter-rotating rollers.

In a preferred embodiment of the present disclosure, the pre-refining is performed at a pressure of at least 10 bar. According to another preferred embodiment of the present disclosure, the pre-refining is performed at a pressure of at least 15 bar. According to another preferred embodiment of the present disclosure, the pre-refining is performed at a pressure of at least 20 bar.

According to another preferred embodiment of the present disclosure, the pre-refining is performed at a pressure in the range of from about 10 bar to about 50 bar. According to another preferred embodiment of the present disclosure, the pre-refining is performed at a pressure in the range of from about 15 bar to about 45 bar. According to another preferred embodiment of the present disclosure, the pre-refining is performed at a pressure in the range of from about 20 bar to 45 bar.

The inventors have found that a high pressure during pre-refining improves the consistency of the composition. This has the advantage that the composition firms up and can be more easily and more quickly applied to a subsequent refining step or to conching which in turn results in an increased throughput of the method of manufacture. In other words, the productivity of the pre-refining step itself as well as the productivity of any subsequent step in the method for manufacture according to the present disclosure is improved when a high pressure is applied.

According to another preferred embodiment of the present disclosure, the pre-refining is performed at a temperature in the range of from about 10 °C to about 40 °C. According to another preferred embodiment of the present disclosure, the pre-refining is performed at a temperature in the range of from about 15 °C to about 35 °C. According to another preferred embodiment of the present disclosure, the pre-refining is performed at a temperature in the range of from about 15 °C to about 30 °C. According to another preferred embodiment of the present disclosure, the pre-refining is performed at a temperature in the range of from about 20 °C to about 30 °C. According to another preferred embodiment of the present disclosure, the pre-refining is performed at a temperature in the range of from about 20 °C to about 25 °C. According to another preferred embodiment of the present disclosure, the pre-refining is performed at a temperature most preferably at a temperature of from about 25 °C.

The inventors found that compositions comprising amorphous substances and/or a high content of fat can be subjected to pre-refining more efficiently when the temperature is lower than the industry standard. In particular, the throughput of the pre-refining step is increased which in turn increases the throughput of the method of manufacture as a whole.

According to another preferred embodiment of the present disclosure, the composition II does not comprise added refined sugar.

In other word, according to a preferred embodiment of the present disclosure, the method for manufacturing of a confectionary product does not comprise a step of providing a refined sugar as defined herein. According to another preferred embodiment of the present disclosure, the method for manufacturing of a confectionary product does not comprise a step of adding a refined sugar as defined herein to composition II.

Refining a composition III

In a preferred embodiment, the method for manufacture of a confectionary product according to the present disclosure further comprises a step of refining the composition I obtained from step iii) to result a composition III.

In another preferred embodiment, the method for manufacture of a confectionary product according to the present disclosure further comprises a step of when the pre-refining step is performed, refining the composition II obtained from step iv) to result a composition III.

As used herein, the refining step may also be referred to as step v).

Generally, the refining may be performed after the mixing step or the pre-refining step but before the conching step.

In the step of refining, the composition I obtained from the step of mixing the components, or, if a pre-refining step is performed, the composition II obtained from the step of pre-refining is inserted into a fine roller for further refining. Typically, a fine roller has five rolls, wherein two adjacent rollers rotate in counter directions. For instance, if the first roller rotates in clockwise direction, the second roller adjacent to the first roller rotates in anticlockwise direction. The third roller adjacent to said second roller then rotates in clockwise direction.

The distance between the five rollers decreases with the number of rollers. Typically, the distance between the first roller and the second roller is about 50 $\mu$m. The distance between the second roller and the third roller is about 25 $\mu$m. The distance between the third roller and the fourth roller is about 20 $\mu$m, and the distance between the fourth roller and the fifth roller is about 15 $\mu$m. The second, third, fourth, and fifth roller are arranged on top of each other; the fifth roller is at the top of the fine roller, the first and second rollers are at the bottom. The rollers at the top of the fine roller rotate faster than those at the bottom.

Typically, the composition I obtained from the step of mixing the components, or, if a pre-refining step is performed, the composition II obtained from the step of pre-refining is inserted into a cleft between the first and the second roller.

During refining, the mass is passed from one roller to the other until the mass reaches the fifth roller on top of the fine roller. The mass is then removed from the fifth roller of the fine roller. Said mass is referred to as composition III or fine rolled mass.

The temperature of each roller can be adjusted individually and independently from each of the other rollers. Generally, a temperature gradient between the rollers is required so that the mass can be passed from one roller to the next. Therefore, the second roller is typically warmer than the first roller.

Typically, the composition I obtained from the step of mixing the components, or, if a pre-refining step is performed, the composition II obtained from the step of pre-refining is inserted into a cleft between the first and the second roller.

According to a preferred embodiment of the present disclosure, the refining step is performed in a machine comprising at least two rollers, wherein the composition II obtained from step iv) is applied to a first or a second roller or to a first and a second roller.

According to a preferred embodiment of the present disclosure, the refining step is performed in a machine comprising at least two rollers, wherein composition II is applied to a first or a second roller or to a first and a second roller, wherein the temperature of the first and second roller is independently in the range of from about 20 °C to about 40 °C. According to a further preferred embodiment, the temperature of the first and second roller is independently in the range of from about 20 °C to about 35 °C. According to a further preferred embodiment of the present disclosure, the temperature of the first and second roller is independently in the range of from about 22 °C to about 33 °C. According to a further preferred embodiment of the present disclosure, the temperature of the first and second roller is independently in the range of from about 24 °C to about 32 °C. According to a further preferred embodiment of the present disclosure, the temperature of the first and second roller is independently preferably in a range of from about 20 °C to about 35 °C. According to a further preferred embodiment of the present disclosure, the temperature of the first and second roller is independently in a range of from about 22 °C to about 33 °C. According to a further preferred embodiment of the present disclosure, the temperature of the first and second roller is independently in a range of from about 24 °C to about 32 °C. According to a further preferred embodiment of the present disclosure, the temperature of the first and second roller is independently in a range of from about 25 °C to about 32 °C. According to a further preferred embodiment of the present disclosure, the temperature of the first and second roller is independently in a range of from about 25 °C to about 31 °C. According to a further preferred embodiment of the present disclosure, the temperature of the first and second roller is independently in a range of from about 25 °C to about 30 °C.

The inventors have surprisingly found that low temperatures of the rollers in the inlet of the fine roller, that are the first and second rollers, increase the throughput of the fine roller. In other words, if the temperature of the first and second roller is low as compared to the industry standard, the mass passes smoothly from the first roller to the second roller. This means that a higher amount of composition I or II can be loaded into the fine roller in a shorter duration of time. In other words, the inventors have optimized the refining step by setting the temperatures of the first and second rollers lower than the industry standard.

According to another preferred embodiment of the present disclosure, the refining step is performed in a machine comprising at least two rollers, wherein the difference in temperature of the first roller and the temperature of the second roller $\Delta T$ is at most 10 °C. According to another preferred embodiment of the present disclosure, the refining step is performed in a machine comprising at least two rollers, wherein the difference in temperature of the first roller and the temperature of the second roller $\Delta T$ is at most 8 °C. According to another preferred embodiment of the present disclosure, the refining step is performed in a machine comprising at least two rollers, wherein the difference in temperature of the first roller and the temperature of the second roller $\Delta T$ is at most 5 °C. According to another preferred embodiment of the present disclosure, the refining step is performed in a machine comprising at least two rollers, wherein the difference in temperature of the first roller and the temperature of the second roller $\Delta T$ is at most 3 °C.

According to another preferred embodiment of the present disclosure, the refining step is performed in a machine comprising at least two rollers, wherein the composition II obtained from the pre-refining step or step iv) is applied to a first roller or a second roller, or a first roller and a second roller, wherein the difference in temperature of the first roller and the temperature of the second roller $\Delta T$ is in the range of from about 0 °C to about 10 °C. According to another preferred embodiment of the present disclosure, the refining step is performed in a machine comprising at least two rollers, wherein the composition II obtained from the pre-refining step or step iv) is applied to a first roller or a second roller, or a first roller and a second roller, wherein the difference in temperature of the first roller and the temperature of the second roller $\Delta T$ is in the range of from about 0 °C to about 8 °C. According to another preferred embodiment of the present disclosure, the refining step is performed in a machine comprising at least two rollers, wherein the composition II obtained from the pre-refining step or step iv) is applied to a first roller or a second roller, or a first roller and a second roller, wherein the difference in temperature of the first roller and the temperature of the second roller $\Delta T$ is in the range of from about 0 °C to about 6 °C. According to another preferred embodiment of the present disclosure, the refining step is performed in a machine comprising at least two rollers, wherein the composition II obtained from the pre-refining step or step iv) is applied to a first roller or a second roller, or a first roller and a second roller, wherein the difference in temperature of the first roller and the temperature of the second roller $\Delta T$ is in the range of from about 0 °C to about 5 °C. According to another preferred embodiment of the present disclosure, the refining step is performed in a machine comprising at least two rollers, wherein the composition II obtained from the pre-refining step or step iv) is applied to a first roller or a second roller, or a first roller and a second roller, wherein the difference in temperature of the first roller and the temperature of the second roller $\Delta T$ is in the range of from about 0.5 °C to about 3 °C. According to another preferred embodiment of the present disclosure, the refining step is performed in a machine comprising at least two rollers, wherein the composition II obtained from the pre-refining step or step iv) is applied to a first roller or a second roller, or a first roller and a second roller, wherein the difference in temperature of the first roller and the temperature of the second roller $\Delta T$ is in the range of from about 1 °C to about 3 °C.

The inventors have surprisingly found that a low temperature difference between the rollers in the inlet of the fine roller, that are the first and second rollers, leads to an increase in the throughput of the fine roller. In other words, if the temperature of the first and second roller are similar or even identical, the mass passes smoothly from the first roller to the second roller. This means that a higher amount of composition I or II can be loaded into the fine roller in a shorter duration of time. This goes against the common general knowledge according to which a higher temperature of the second roller is needed for the compositions to be passed from one roller to a subsequent roller.

According to another preferred embodiment of the present disclosure, the composition III does not comprise added refined sugar.

In other word, according to a preferred embodiment of the present disclosure, the method for manufacturing of a confectionary product does not comprise a step of providing a refined sugar as defined herein. According to another preferred embodiment of the present disclosure, the method for manufacturing of a confectionary product does not comprise a step of adding a refined sugar as defined herein to composition III, i.e. the composition III does not comprise added refined sugar.

Conching and composition IV

In a preferred embodiment, the method for manufacture of a confectionary product according to the present disclosure further comprises a step of conching the composition I to a result a conched composition IV.

In another preferred embodiment, the method for manufacture of a confectionary product according to the present disclosure under the provision that a pre rolling step is performed further comprises a step of conching the composition II obtained from the pre rolling step to a result a conched composition IV.

In another preferred embodiment, the method for manufacture of a confectionary product according to the present disclosure under the provision that a refining step is performed further comprises a step of conching the composition III obtained from the refining step to a result a conched composition IV.

As used herein, the conching step may also be referred to as "conching" or "step v)".

In general, conching is a process used in the manufacture of a confectionary product in which cocoa butter is evenly distributed within a confectionary composition. When ingredients are mixed in this way, sometimes for up to 78 hours, confectionary products, in particular chocolate, can be produced with a mild, and rich taste. Generally, conching time depends on the composition and desired flavor profile.

Conching is the last step of chocolate mass production. The aim is a degassing, water reduction, aromatization, homogenization and adjustment of the rheological properties. For that, the chocolate mass is sheared, mixed and stirred under controlled conditions, such as temperature, ventilation and energy input. Cocoa butter and emulsifiers are added controlling the process by changing the rheological properties of the chocolate mass to the specific needs.

Advantageously, air flowing through the conche removes unwanted acetic, propionic, and butyric acids from the composition. However, there is an inherent risk that humidity is introduced into the composition during conching with the air stream. This results in the formation of agglomerates and grit formation of dry components of the composition, in particular when hygroscopic and/or amorphous components are present in the composition.

The formation of agglomerates and grit does not only reduce the taste and mouthfeel of the confectionary products, and thus the overall quality of the resulting product, but also imposes manufacturers with the necessity to filter the compositions after conching to remove large particles or agglomerates. In case larger amounts of agglomerates or grit are formed, problems may arise in transferring the (intermediate) products from one vessel to another, thereby requiring additional process steps during production.

Usually, the composition is removed from a conche after conching by pumping it through a filter. This is a standard process which is carried out at least for food safety reasons and must not be omitted. When agglomerates and/or grit are present, the conche cannot be emptied, but the filters may clog. In such case, the filters have to be changed and/or the composition must be manually removed from the conche. Furthermore, material is lost increasing the amount of produced waste and the composition of the is changed in an unpredictable manner. The latter dramatically reduces reworkability of the process and results in a varying product quality. In other words, the manufacture of high quality confectionary products is put at stake when grit is formed during the manufacturing process. The method of manufacture according to the present disclosure overcomes these challenges.

As accepted in the art, the formation of agglomerates and grit occurs during conching when moisture is introduced into the composition, in particular when moisture is introduced into the composition comprising hygroscopic and/or amorphous components in combination with high temperature and long conching time. Therefore, care must be taken during conching to ensure that the moisture contained in the chocolate composition is not increased, to avoid any grit-forming effect. This in particular applies when conching conditions are used that are commonly associated with condensation of moisture. In such conditions, it can be required to carry out the conching without aeration when amorphous substances are present in a composition. This avoids the introduction of moisture into the conche. Even though this might help to avoid the formation of grit, unwanted flavors of acetic, propionic, and butyric acids from cocoa fermentation cannot be removed from the composition. In other words, the taste of a confectionary product which has been prepared by conching without active aeration is dramatically impaired.

However, the inventors of the present disclosure have surprisingly found a method to conduct the conching step with active aeration to improve the taste of the composition and at the same time avoid the formation of agglomerates and grit despite the presence of hygroscopic, amorphous components, such as amorphous sweeteners, in the compositions.

According to a preferred embodiment of the present disclosure, the method of the present disclosure comprises a step via) wherein cocoa butter is added to the composition III obtained from step v) to provide a composition IIIa, wherein the composition IIIa has a content of fat in the range of from about 10 wt.-% to about 50 wt.-% based on the total weight of the composition IIIa. According to a further preferred embodiment of the present disclosure, the composition IIIa has a content of fat in the range of from about 25 wt.-% to about 45 wt.-% based on the total weight of the composition IIIa. According to a further preferred embodiment of the present disclosure, the composition IIIa has a content of fat in the range of from about 30 wt.-% to about 40 wt.-% based on the total weight of the composition IIIa. According to a further preferred embodiment of the present disclosure, the composition IIIa has a content of fat in the range of from about 35 wt.-% to about 40 wt.-% based on the total weight of the composition IIIa.

According to a preferred embodiment of the present disclosure, the conching is performed at a temperature in the range of from about 25 °C to about 80 °C. According to a further preferred embodiment of the present disclosure, the conching is performed at a temperature in a range of from about 30 °C to about 70 °C. According to a further preferred embodiment of the present disclosure, the conching is performed at a temperature in a range of from about 35 °C to about 60 °C. According to a further preferred embodiment of the present disclosure, the conching is performed at a temperature in a range of from about 40 °C to about 60 °C. According to a further preferred embodiment of the present disclosure, the conching is performed at a temperature in a range of from about 40 °C to about 55 °C. According to a further preferred embodiment of the present disclosure, the conching is performed at a temperature in a range of from about 40 °C to about 50 °C. According to a further preferred embodiment of the present disclosure, the conching is performed at a temperature in the range of from about 40 °C to about 45 °C.

As used herein, the temperature at which the conching step is performed is defined as the maximum temperature between loading and emptying of the conche. In other words, the temperature at which conching is carried out is the temperature of the composition to be conched when loaded into the conche, and/or the temperature of the conched composition when the composition is removed from the conche.

Generally, the temperature of the conche is controlled and varies for different types of confectionary products. As a rule, a higher temperature leads to a shorter required processing time and reduced moisture content of the composition. Commonly, the temperature varies from about 50 °C for milk chocolate to up to about 85 °C for dark chocolate. The elevated temperature leads to a partially caramelized flavor and in milk chocolate promotes the Maillard reaction.

Despite the comparatively low temperature during conching according to the present disclosure, the inventors have found that the moisture content of the composition is so low that no agglomerates or grit is formed during conching. Contrary to the well-established relationship between conching temperature and the moisture content of the composition, the inventors have found that conching can be performed at low temperatures despite the presence of amorphous substances, specifically amorphous sweeteners, in the compositions.

According to a preferred embodiment of the present disclosure, the conching is performed for a period of time in the range of from about 0.5 h to about 24 h. According to a further preferred embodiment of the present disclosure, the conching is performed for a period of time in the range of from about 1 h to about 18 h. According to a further preferred embodiment of the present disclosure, the conching is performed for a period of time in the range of from about 2 h to about 14 h. According to a further preferred embodiment of the present disclosure, the conching is performed for a period of time in the range of from about 3 h to about 12 h. According to a further preferred embodiment of the present disclosure, the conching is performed for a period of time in the range of from about 3 h to about 10 h. According to a further preferred embodiment of the present disclosure, the conching is performed for a period of time in the range of from about 3.5 h to about 8 h. According to a further preferred embodiment of the present disclosure, the conching is performed for a period of time in the range of from about 4 h to about 7 h. According to a further preferred embodiment of the present disclosure, the conching is performed for a period of time in the range of from about 4 h to about 6 h. As used herein, the period of time for which the conching is performed may also be referred to as the conching time.

In the sense of the present disclosure, the period of time for which the conching is performed, which is also referred to the "conching time", is the period of time between the end of the loading of the conche with the composition to be conched and the start of removing the conched composition from the conche.

Generally, a low temperature during conching requires a long conching time. However, the inventors of the present disclosure have surprisingly found, that already short conching times at comparably low temperatures are required to obtain a confectionary product, in particular a dark chocolate, of excellent taste.

For this, it is of particular importance that the conching is carried out with active aeration. According to another preferred embodiment of the present disclosure, the conching step is performed with the supply of gas. According to a further preferred embodiment of the present disclosure, the conching step is performed with the supply of gas, wherein the gas comprises oxygen. According to another preferred embodiment of the present disclosure, the conching step is performed with the supply of gas, wherein the gas is air. As used herein, active aeration means that gas, such as air, is purposefully introduced to the composition during the conching. In the sense of the present disclosure, such active aeration may be archived through directing a strong gas or air stream generated by an industrial fan or industrial blower into the conche.

Contrary to the expectation, the inventors of the present disclosure found that conching with active aeration during conching does not result in a substantial formation of agglomerates and grit, and preferably does not result in the formation of agglomerates and grit. This is particularly surprising, as both the active aeration as well as a low conching temperature are commonly associated with an increase in the moisture content of a composition during conching. As a consequence, grit formation can be expected. The opposite was found.

Even more, the active aeration during conching yielded a confectionary product, specifically a dark chocolate, with both excellent mouthfeel and taste free of acetic acid, propionic acid and butyric acid tastes. In summary a high quality confectionary products was obtained after conching.

According to a preferred embodiment of the present disclosure, the conched composition IV is substantially free of agglomerates. According to a further preferred embodiment of the present disclosure, the conched composition IV is substantially free of agglomerates consisting of the at least one sweetener, wherein the agglomerates have a maximum particle size $D_f$ of more than 5 mm. According to a preferred embodiment of the present disclosure, the conched composition IV is substantially free of agglomerates consisting of the at least one sweetener, wherein the agglomerates have a maximum particle size $D_f$ of more than 4 mm. According to a preferred embodiment of the present disclosure, the conched composition IV is substantially free of agglomerates consisting of the at least one sweetener, wherein the agglomerates have a maximum particle size $D_f$ of more than 3 mm. According to a preferred embodiment of the present disclosure, the conched composition IV is substantially free of agglomerates consisting of the at least one sweetener, wherein the agglomerates have a maximum particle size $D_f$ of more than 2 mm. According to a preferred embodiment of the present disclosure, the conched composition IV is substantially free of agglomerates consisting of the at least one sweetener, wherein the agglomerates have a maximum particle size $D_f$ of more than 1 mm. According to a preferred embodiment of the present disclosure, the conched composition IV is substantially free of agglomerates consisting of the at least one sweetener, wherein the agglomerates have a maximum particle size $D_f$ of more than 0.5 mm.

As used herein, the expression "substantially free of agglomerates" having a specific maximum particle size $D_f$ of the agglomerates, in particular agglomerates of the at least one sweetener, means that a filter having a pore size of the same $D_f$ does not show clogging when an amount of 100 kg of composition is filtered through said filter. In other words, a conched composition IV is substantially free of agglomerates having a maximum particle size $D_f$ of 0.5 mm, for example, if a filter having a pore size of 0.5 mm can be used to filter 100 kg of said conched composition without cleaning the filter or other signs of clogging.

According to another preferred embodiment of the present disclosure, the conched composition IV comprises agglomerates in an amount of 5 wt.-% or less based on the total weight of the conched composition IV. According to a further preferred embodiment of the present disclosure, the conched composition IV comprises agglomerates in an amount of 2.5 wt.-% or less based on the total weight of the conched composition IV. According to a further preferred embodiment of the present disclosure, the conched composition IV comprises agglomerates in an amount of 1.5 wt.-% or less based on the total weight of the conched composition IV. According to a further preferred embodiment of the present disclosure, the conched composition IV comprises agglomerates in an amount of 1 wt.-% or less based on the total weight of the conched composition IV. According to a further preferred embodiment of the present disclosure, the conched composition IV comprises agglomerates in an amount of 0.8 wt.-% or less based on the total weight of the conched composition IV. According to a further preferred embodiment of the present disclosure, the conched composition IV comprises agglomerates in an amount of 0.7 wt.-% or less based on the total weight of the conched composition IV. According to a further preferred embodiment of the present disclosure, the conched composition IV comprises agglomerates in an amount of 0.5 wt.-% or less based on the total weight of the conched composition IV.

In the sense of the present disclosure, the amount of agglomerates of a specific maximum particle size $D_f$ as used herein is determined by weighing the part of the conched composition IV that remains on the filter of the same pore size Dr after filtration in relation to the weight of the conched composition IV subjected to said filtration. For example, if 0.1 kg of 100 kg of the conched composition IV is retained by a filter having a pore size $D_f$ of 0.5 mm, the conched composition contains the agglomerates of a maximum particle diameter $D_f$ of 0.5 mm in an amount of 0.1 wt.-% based on the total weight of the conched composition IV.

According to another preferred embodiment of the present disclosure, the composition IV does not comprise added refined sugar as defined herein.

In other word, according to a preferred embodiment of the present disclosure, the method for manufacturing of a confectionary product does not comprise a step of providing a refined sugar as defined herein. According to another preferred embodiment of the present disclosure, the method for manufacturing of a confectionary product does not comprise a step of adding a refined sugar as defined herein to composition IV.

Storing

A method for manufacture of a confectionary product frequently includes the storage of the compositions, such as the composition I obtained by the mixing step, the composition II obtained by the pre-refining step, the composition III obtained by the refining step, and/or the composition IV obtained by the conching step in the sense of the present disclosure, before the composition is subjected to further processing or finalizing the confectionary product, such as by molding into bars.

According to the industry standard, the compositions are stored in tanks in the liquid state at an elevated temperature. However, storing a composition in its liquid state inevitable bears the risk of phase transformation of components of the composition. Such phase transformations are crystallization including release of moisture, formation of agglomerates, and/or grit formations.

In other words, compositions comprising components, in particular sweeteners in the sense of the present disclosure, are not considered suitable for storing because the structure of the composition is rapidly changed through crystallization, formation of agglomerates and/or grit formation. This is accelerated by the viscous circle of crystallization and moisture release which is inherent to sweeteners, in particular the amorphous sweeteners according to the present disclosure.

Therefore, there is a long-established technical prejudice in the field of food science that the use of amorphous substances, in particular amorphous sweeteners, must be avoided in methods for the manufacture of a confectionary product. If such substance is present, it is common sense in the field that the compositions must be immediately processed without storage.

The inventors of the present disclosure found the opposite: After storing the compositions according to the present disclosure for several weeks at 45 °C in the liquid stage, no formation of grit and/or agglomerates was observed. To the contrary, both the texture and the taste of the compositions are preserved throughout the time of storage. Therefore, the method for manufacture according to the present disclosure is compatible with the standards of the industrial field. In other words, the method for manufacture of a confectionary product according to the present disclosure can be carried out without adopting the machines of an industrial production line for the production of confectionary products. This results in reduced costs for the production of confectionary products.

Without wishing to be bound by theory, it is assumed that the combination of one or more of the aforementioned process steps according to the present disclosure with the compositions, such as a high content of fat in the compositions and/or low content of moisture in the at least one sweetener, is sufficient to protect the particles of the at least sweetener with a fat coating in such a way, that no moisture or water can come into contact with the sweetener. Further, said coating also prevents moisture and water from release into the composition when crystallization, agglomeration, and/or grit formation occurs. Hence, such phenomenon is limited to very small parts of the composition and cannot spread throughout the composition.

According to a preferred embodiment of the disclosure, the method for manufacturing a confectionary product further comprising a step vii), wherein the composition IV obtained from step v) is stored in a storage tank at a temperature in the range of from about 20 °C to about 60 °C.

As used herein, the step of storing the composition IV obtained from the conching step, the step of storing the composition III obtained from the refining step, the step of storing the composition II obtained from the pre-refining step, and/or the step of storing the composition I obtained from the mixing step is also referred to as "step vii)" or "storing".

According to a further preferred embodiment of the disclosure, the method for manufacturing a confectionary product further comprising a step vii), wherein the composition IV obtained from step v) is stored in a storage tank at a temperature in the range of from about 30 °C to about 60 °C. According to a further preferred embodiment of the disclosure, the method for manufacturing a confectionary product further comprising a step vii), wherein the composition IV obtained from step v) is stored in a storage tank at a temperature in the range of from about 35 °C to about 55 °C. According to a further preferred embodiment of the disclosure, the method for manufacturing a confectionary product further comprising a step vii), wherein the composition IV obtained from step v) is stored in a storage tank at a temperature in the range of from about 40 °C to about 55 °C. According to a further preferred embodiment of the disclosure, the method for manufacturing a confectionary product further comprising a step vii), wherein the composition IV obtained from step v) is stored in a storage tank at a temperature in the range of from about 40 °C to about 50 °C. According to a further preferred embodiment of the disclosure, the method for manufacturing a confectionary product further comprising a step vii), wherein the composition IV obtained from step v) is stored in a storage tank at a temperature in the range of from about 42 °C to about 47 °C. According to a further preferred embodiment of the disclosure, the method for manufacturing a confectionary product further comprising a step vii), wherein the composition IV obtained from step v) is stored in a storage tank at a temperature of about 45 °C.

According to another preferred embodiment of the disclosure, the method for manufacturing a confectionary product further comprising a step vii), wherein the amount of agglomerates in step vii) increases by no more than 10 wt.-% relative to the proportion of agglomerates in the conched mass IV in a period of 24 hours. According to a further preferred embodiment of the disclosure, the method for manufacturing a confectionary product further comprising a step vii), wherein the amount of agglomerates in step vii) increases by no more than 5 wt.-% relative to the proportion of agglomerates in the conched mass IV in a period of 24 hours. According to a further preferred embodiment of the disclosure, the method for manufacturing a confectionary product further comprising a step vii), wherein the amount of agglomerates in step vii) increases by no more than 2.5 wt.-% relative to the proportion of agglomerates in the conched mass IV in a period of 24 hours. According to a further preferred embodiment of the disclosure, the method for manufacturing a confectionary product further comprising a step vii), wherein the amount of agglomerates in step vii) increases by no more than 1 wt.-% relative to the proportion of agglomerates in the conched mass IV in a period of 24 hours. According to a further preferred embodiment of the disclosure, the method for manufacturing a confectionary product further comprising a step vii), wherein the amount of agglomerates in step vii) increases by no more than 0.1 wt.-% relative to the proportion of agglomerates in the conched mass IV in a period of 24 hours.

The confectionary products

According to a preferred embodiment of the present disclosure, the method for manufacture of a confectionary product is a method for manufacture of a chocolate product.

According to another preferred embodiment of the present disclosure, the method for manufacture of a confectionary product is a method for manufacture of a chocolate substitute product.

According to a further preferred embodiment of the present disclosure, the method for manufacture of a confectionary product is a method for manufacture of a chocolate product or chocolate substitute product according to the German Regulation on Cocoa and Chocolate Products of 15 December 2003 (KakaoV 2003).

According to a further preferred embodiment of the present disclosure, the method for manufacture of a confectionary product is a method for manufacture of a confectionary product is a method for manufacture of a chocolate product selected from the group consisting of milk chocolate, dark chocolate, white chocolate, and vegan chocolate

According to a further preferred embodiment of the present disclosure, the method for manufacture of a confectionary product is a method for manufacture of a confectionary product is a method for manufacture of milk chocolate, dark chocolate, and/or white chocolate wherein said chocolate according to the requirements of the German Regulation on Cocoa and Chocolate Products of 15 December 2003 (KakaoV 2003).

According to a further preferred embodiment of the present disclosure, the method for manufacture of a confectionary product is a method for manufacture of a confectionary product is a method for manufacture of milk chocolate.

According to a further preferred embodiment of the present disclosure, the method for manufacture of a confectionary product is a method for manufacture of a confectionary product is a method for manufacture of dark chocolate.

In a further aspect, the present disclosure relates to a confectionary product obtained by a method according to the present disclosure.

According to a further preferred embodiment, the present disclosure relates to a confectionary product obtained by a method according to the present disclosure, wherein the confectionary product is a chocolate product or chocolate substitute product according to the requirements of the German Regulation on Cocoa and Chocolate Products of 15 December 2003 (KakaoV 2003).

According to a further preferred embodiment, the present disclosure relates to a confectionary product obtained by a method according to the present disclosure, wherein the confectionary product is a chocolate product selected from the group consisting of milk chocolate, dark chocolate, white chocolate and vegan chocolate.

According to a further preferred embodiment, the present disclosure relates to a confectionary product obtained by a method according to the present disclosure, wherein the confectionary product is a dark chocolate.

According to a further preferred embodiment, the present disclosure relates to a confectionary product obtained by a method according to the present disclosure, wherein the confectionary product is a milk chocolate.

According to a further preferred embodiment, the present disclosure relates to a confectionary product obtained by a method according to the present disclosure, wherein the confectionary product does not comprise added refined sugar as defined herein.

## Definitions

The present invention will be described with respect to particular embodiments and with reference to certain figures but the invention is not limited thereto but only by the claims. Terms as set forth hereinafter are generally to be understood in their common sense unless indicated otherwise.

Where the term "comprising" is used in the present description and claims, it does not exclude other elements. For the purposes of the present invention, the term "consisting of" is considered to be a preferred embodiment of the term "comprising". If a group is defined to comprise at least a certain number of embodiments herein, this is also to be understood to disclose a group, which preferably consists only of these embodiments. Furthermore, if a composition is defined using the term "comprising", it may additionally comprise other elements not explicitly listed, however, not further amounts of an element listed. As such, if, e.g., a composition comprises cocoa butter in an amount of 20 wt.-% based on the total mass of the composition, said composition may comprise elements other than cocoa butter, however, not additional amounts of cocoa butter, thereby exceeding the amount of 20 wt.-% based on the total.

The term "about" in conjunction with a numerical value refers to normal deviations of said numerical value. It is to be understood that the term "about" can mean a deviation of $\pm$ 10 %, preferably $\pm$ 5 %, more preferably $\pm$ 2.5 % of said numeric value as indicated.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" even though such a limited understanding is always included by the terms "obtained" or "defined" as a preferred embodiment.

As used herein, the term "content of fat" (CF) is given in wt.-% based on the total weight of the composition. The content of fat (CF) is determined by calculation, specifically using the formula

$$CF = CB \cdot 1 + CM \cdot 0.53 + CP \cdot 0.11 + WMP \cdot x + SMP \cdot 0.01$$

wherein CB is the amount of cocoa butter in wt.-% based on the total weight of the composition, CM is the amount of cocoa mass in wt.-% based on the total weight of the composition, CP is the amount of cocoa powder in wt.-% based on the total weight of the composition, WMP is the amount of whole milk powder in wt.-% based on the total weight of the composition, and SMP is the amount of skim milk powder in wt.-% based on the total weight of the composition. It is understood that the content of fat of cocoa butter is 100 wt.-%, the content of fat of cocoa mass is about 53 wt.-%, the content of fat of cocoa powder is about 11 wt.-%, and the content of fat of skim milk powder is about 1 wt.-%, and x is the content of fat of whole milk powder. It is understood that the fat content may vary depending on the variety or supplier of the milk powder. In one embodiment, the fat content of whole milk powder x is in the range of from about 20 wt.-% to about 35 wt.-%. In one embodiment, the fat content of whole milk powder x is about 24 wt.-%. In one embodiment, the fat content of whole milk powder x is about 25 wt.-%. In one embodiment, the fat content of whole milk powder x is about 26 wt.-%. In one embodiment, the fat content of whole milk powder x is about 27 wt.-%. In one embodiment, the fat content of whole milk powder x is about 28 wt.-%. In one embodiment, the fat content of whole milk powder x is about 29 wt.-%. In one embodiment, the fat content of whole milk powder x is about 30 wt.-%.

The measurement of the fineness and $D_{50}$ values is typically performed by means of a micrometer screw. The method is applied to confectionary products, in particular chocolate products, and intermediate products during their preparation, including but not limited to raw chocolate compositions, pre-rolled chocolate compositions, fine rolled chocolate compositions, conched chocolate compositions, and compositions after storage. On a balance (Mettler PB002-LDR3; accuracy 0.01 g), a sample of 1.0 g of melted composition to be analyzed is weighed onto a watch glass and 0.5 g of paraffin oil (obtained from Merck, Darmstadt, Germany; Art. No 1.071474.1000) is added. The sample and the paraffin oil are carefully homogenized with a spatula without pressing. Then, a drop of sample is placed on the fixed measuring surface of the micrometer (Tesa micromaster 0-30 mm). The spindle is carefully closed with the friction clutch until it stops. Afterwards, measurement is started to give the fineness as $D_{94}$. At least triple determination is made. According to a preferred embodiment, quintuple determination is made.

As used herein, the term "moisture" is that component of a substance which remains after deduction of the dry matter. Dry matter and moisture are therefore 100% complementary. By definition, moisture is the same as water content. The terms "moisture" and "moisture content" are used interchangeably.

The moisture content is measured according to the OICCC vacuum method: Liquid, pasty samples, sugar and fine powders can be used without further preparation. Any solid and coarse materials, such as the sweeteners, are crushed or melted before the measurement and then homogenized. Two weighing jars are prepared by drying them with the lids removed for 1 h at 102 ± 2 °C in an oven. The weighing jars are left to cool down to room temperature for 45 min in a desiccator and thein weighed to the nearest 0.0001 g (tare) on an analytic balance. Then 2-5 g of sample are weighed into each of the weighing glasses and the amount is determined on the analytical balance to the nearest 0.0001 g (weight A). Then, the weighing glasses are stored in an oven at 70 °C for 4 to 6 h in vacuum. Afterwards, the weighing glasses are allowed to cool down to room temperature for 45 min in a desiccator with the lids on. Finally, the weighing glasses are weighed on the analytical balance to an accuracy of 0.0001 g (weight B). The moisture content can then be calculated according to the formula:

$$\text{moisture content} = \frac{\text{weight A [g]} - \text{weight B [g]}}{\text{weight A [g]} - \text{tare [g]}} \cdot 100\%$$

As used herein, the terms *"throughput'* and *"productivity"* are used interchangea bly. In the sense of the present disclosure the term *"throughput'* refers to the amount of composition that can be processed in any one of the steps of the method for manufacture of the present disclosure in a specific duration of time. In other words, if the *"throughput'* is high or increased, this means that a larger amount of composition can be processed in a step of the method for manufacture of the present disclosure and/or in a shorter time.

As used herein, the term "sweetener" is defined as a food additive that is added to a food composition to confer a sweet taste to said food composition.

As used herein, the term "$D_{50}$" is defined as mean particle diameter of a batch of particles as determined by sieve analysis or by micrometer screw as defined herein.

As used herein, the $D_{50}$ is determined by micrometer screw is the numerical $D_{50}$ value.

As used herein, the $D_{50}$ is determined by sieve analysis is the weight $D_{50}$ value. In one embodiment, the $D_{50}$ determined by sieve analysis with a Retsch analytical sieve shaker AS200 (Retsch GmbH , Germany).

As used herein, a $D_{50}$ is determined by sieve analysis which is carried out by sieving a batch of particles through a series of sieves of progressively smaller mesh size and determining the proportion of retained particles *%retained$_x$*

for each sieve x by weighing the mass of particles retained by each sieve $w_{sieve,x}$ in relation to the total combined weight retained by all sieves $w_{total}$.

Then the cumulative mass of particles passing through, i.e., not retained by, each sieve x is calculated and plotted against the mesh size of the sizes generating a plot. The $D_{50}$ that is the mean particle diameter of the batch of particle is determined by reading the mesh size form the plot at which 50 % of the mass of the batch of particles pass through said mesh size.

As used herein, the term "$D_{100}$" of a batch of particles is defined as the maximum particle diameter $D_{100}$ value determined by sieve analysis. The $D_{100}$ of a particle is the maximum diameter of a particle that can pass through a mesh of a defined size. In other words the $D_{100}$ of a particle is the size of the mesh of a sieve through which all particles of a batch can pass. The size of the mesh of a sieve can be determined by common means. The size of the mesh of a sieve can be determined by measuring with a caliper.

As used herein, the term "$D_f$" of an agglomerate is defined as the diameter Dr value determined by sieve analysis. The $D_f$ of an agglomerate is the maximum diameter of an agglomerate that can pass through a mesh of filter having a defined pore size $D_f$. In other words the $D_f$ of an agglomerate is the minimum size of the particles that are retained by a filter of pore size $D_f$. The pore size of the filter $D_f$ can be determined by common means. The pore size of the filter $D_f$ can be determined by measuring with a caliper. According to a preferred embodiment of the present disclosure, the Dr is the $D_{100}$.

## Examples

The present invention as illustratively described in the following may suitably be practiced in the absence of any element or elements, limitation or limitations, not specifically disclosed herein.

Example 1: Providing raw materials

Cocoa butter, cocoa mass, and cocoa powder were prepared by common means known in the art or obtained from commercial suppliers.

Pulp sugars were obtained from commercial supplier and were prepared by harvesting cocoa pods in the country of origin, the cocoa fruit pulp was separated from the cocoa beans using a straining machine, and then pasteurized. The cocoa pulp was then either dried or mixed with cocoa powder and then dried, accordingly.

**Table 1** Overview on pulp sugars

| Raw material code | $D_{100}$ [mm] | moisture [%] | Drying process | Cocoa powder [wt.-%] |
|---|---|---|---|---|
| 1 | 6 | 0.74 | Roller drying | - |
| 2 | 0.3 | 1.31 | Roller drying | - |
| 3 | 2 | 1.25 | Roller drying | - |
| 4 | 6 | 0.91 | Roller drying | - |
| 5 | 0.3 | 1.60 | Roller drying | 10% |
| 6 | 6 | 0.44 | Roller drying | 10% |
| 7 | 0.3 | 1.09 | Roller drying | 10% |
| 8 | 6 | 0.36 | Roller drying | 15% |
| 9 | | 0.88 | Spray drying | - |

Example 2: Mixing, pre-refining and refining

The raw materials obtained in example 1 were mixed in a mixer (200 kg vertical mixer, from Bühler AG) to give raw mixture containing 62 wt.-% of cocoa mass, 11 wt.-% of cocoa powder, 27 wt.-% of the pulp sugar:

| Material | [wt.-%] |
|---|---|
| Cocoa Mass | 62 |
| Cocoa Powder | 11 |

(continued)

| Material | [wt.-%] |
|---|---|
| Pulp Sugar | 27 |
| **100.00** | |

Without wishing to be bound by theory, it is assumed that the high fat content helps to envelop the amorphous surfaces of the sweetener particles with a fat phase. On the other hand, the composition has a comparatively liquid consistency as compared to standard raw chocolate compositions. This may cause problems in the downstream steps, i.e., pre-refining and refining. To firm up the composition, further cocoa powder may be added as the last component. The final fat content was about 34 %.

After mixing, the composition comprising pulp sugar with raw material code 6 according to table 1 was subjected to a pre-refining step in a rolling device (900 mm PreFiner, Bühler AG) under the conditions as summarized in the following.

**Table 2** Conditions and results of pre-refining

| | Amount of composition [kg] | Pressure of pre-refining [bar] | Throughput [kg/h] |
|---|---|---|---|
| 1 | 200 | 22 | 145 |
| 2 | 200 | 24 | 169 |

As can be concluded from the results in Table 2, higher pressures are beneficial to improve the throughput in the refining step. The high pressure is helpful to obtain a pre-rolled composition having an appropriate consistency, i.e., the composition firms up.

The pre-rolled composition was then subjected to a refining in a refiner (900mm Finer S, Bühler AG) having 5 rolls one above the other. The pre-rolled composition was applied onto the lowermost roll, i.e., the first roll. Then, the chocolate mass is passed onto the next upper roll, i.e., the second roll, until it reaches the last, i.e., the fifth roll. Thus, the chocolate composition is refined. Refining was performed under the following conditions:

**Table 3** Influence of temperature of rolls on refining (average over several batches)

| | Amount of composition [kg] | Temperature of first roll [°C] | Temperature of second roll [°C] | Throughput [kg/h] | Fineness [µm] |
|---|---|---|---|---|---|
| Standard | 200 | 35 | 37 | 59 | 25.8 |
| | 200 | 28 | 30 | 110 | 19.3 |

As can be concluded from the results in Table 3, the standard conditions usually applied in the industry give a minor throughput. The inventors of the present disclosure surprisingly found that the throughput and the chocolate fineness could be considerably improved when the temperature of the first and second roll in the inlet of the refiner was considerably reduced.

These particularly good results could be confirmed for all pulp sugars:

**Table 4** Overview of results of refining for chocolate compositions containing pulp sugars according to Table 1 pulp sugars

| Raw material code | Throughput [kg/h] | Finness [µm] |
|---|---|---|
| 1 | 123 | 29.0 |
| 2 | 113 | 24.7 |
| 3 | 128 | 29.0 |
| 4 | 128 | 24.0 |
| 5 | 122 | 19.7 |
| 6 | 149 | 13.3 |
| 7 | 75 | 17.7 |
| 8 | 166 | 16.3 |

(continued)

| Raw material code | Throughput [kg/h] | Finness [μm] |
|---|---|---|
| 9 | 141 | 17.7 |

From these results it can be concluded that the addition of cocoa powder to the pulp sugar, i.e., the coating of the particles of the pulp sugar in samples 5-8 improves the fineness of the chocolate composition after refining.

Example 3: Conching

Prior to conching, cocoa butter was added into the conche (200kg Frisse Düc, Bühler AG) to adjust the fat content of the compositions to about 37 % before starting the main conching time. Conching was performed for a time of 4-12 h at a temperature in the range of from 40-60 °C with active aeration. It is understood that the conching is performed under active aeration conditions to remove unpleasant aromatic substances, such as acetic acid, to result a chocolate with improved taste. On the other hand, active aeration might introduce moisture into the composition and hence result in the formation of grit and large agglomerates which would reduce the mouthfeel and organoleptic properties of the composition. After the main conching time, the resulting conched composition was filtered through a 2 mm mesh for food safety and regulatory considerations.

Table 5 Overview of results of conching for chocolate compositions containing pulp sugars according to Table 1 pulp sugars

| Raw material code | Filter blocked |
|---|---|
| 1 | Yes |
| 2 | Yes |
| 3 | Yes |
| 4 | Yes |
| 5 | No |
| 6 | No |
| 7 | No |
| 8 | No |
| 9 | No |

In conclusion, a pulp sugar which was coated with 10 % of cocoa powder, and the pulp sugars having particularly low content of moisture well below 1 wt.-% are resistant to formation of grit and large agglomerates despite active aeration during the conching step. Using such pulp sugars in the chocolate compositions results in chocolates of particularly pleasant taste and mouthfeel.

The conched chocolate compositions can be stored under the conditions of the industry standard at 45 °C for several weeks without showing any deterioration in taste or mouthfeel, in particular no musty flavor is developed, and without showing the formation of agglomerates.

**Embodiments**

1. A method for manufacture of a confectionary product comprising the steps of

　　i) Providing at least one sweetener,
　　ii) Providing at least one ingredient from a cocoa bean selected from the group consisting of cocoa mass, cocoa butter, cocoa powder, and mixtures thereof; and
　　iii) Mixing components from i) and ii) to form a composition I.

2. The method according to embodiment 1, further comprising the step of
iv) pre-refining the composition I obtained from step iii) to result a composition II.

3. The method according to any one of embodiments 1 or 2, further comprising the step of v) refining the composition I obtained from step iii), or,

when step iv) is performed, refining the composition II obtained from step iv)

to result a composition III.

4. The method according to any one of embodiments 1 to 3, further comprising the step of

vi) Conching the composition I obtained from step iii), or,

when step iv) is performed, conching the composition II obtained from step iv), or,

when step v) is performed, conching the composition III obtained from step v) to a result a conched composition IV.

5. The method according to any one of embodiments 1 to 4, wherein the confectionery product is a chocolate product or a chocolate substitute product, preferably the confectionery product is a chocolate product or chocolate substitute product according to the German Regulation on Cocoa and Chocolate Products of 15 December 2003 (KakaoV 2003).

6. The method according to any one of embodiments 1 to 5, wherein the confectionary product is a chocolate product selected from the group consisting of milk chocolate, dark chocolate, white chocolate, and vegan chocolate; preferably milk chocolate, dark chocolate, and/or white chocolate, wherein said chocolate complies with the requirements of the German Ordinance on Cocoa and Chocolate Products of 15 December 2003 (KakaoV 2003).

7. The method according to any one of embodiments 1 to 6, wherein the confectionary product is a dark chocolate.

8. The method according to any one of embodiments 1 to 6, wherein the confectionary product is a milk chocolate.

9. The method according to any one of embodiments 1 to 8, wherein the at least one sweetener is selected from the group consisting of a sweetener derived from the cocoa fruit, allulose, polydextrose, soluble corn fiber, super sweeteners, preferably maltitol or erythritol, and mixtures thereof.

10. The method according to any one of embodiments 1 to 9, wherein the at least one sweetener is an amorphous sweetener.

11. The method according to embodiment 10, wherein the amorphous sweetener is a sweetener derived from the cocoa fruit, preferably wherein the sweetener derived from a cocoa fruit is derived from the pulp of the cocoa fruit, more preferably wherein the sweetener derived from a cocoa fruit is a pulp sugar.

12. The method according to any one of embodiments 1 to 11, wherein the at least one sweetener has an average particle size $D_{50}$ of at least 0.1 mm, preferably the at least one sweetener has an average particle size $D_{50}$ of at least 0.5 mm, more preferably the at least one sweetener has an average particle size $D_{50}$ of at least 1.0 mm, more preferably the at least one sweetener has an average particle size $D_{50}$ of at least 2.0 mm, more preferably at least 3.0 mm, most preferably at least 4.0 mm.

13. The method according to any one of embodiments 1 to 12, wherein the at least one sweetener has an average particle size $D_{50}$ in the range of from about 0.1 mm to about 10 mm, preferably in the range of from about 0.5 mm to about 8 mm, more preferably in the range of from about 1 mm to about 7 mm, more preferably in the range of from about 2 mm to about 6 mm, more preferably in the range of from about 3 mm to about 6 mm, more preferably in the range of from about 4 mm to about 6 mm, most preferably in the range of from about 4 mm to about 5 mm.

14. The method according to any one of embodiments 1 to 13, wherein the at least one sweetener has a maximum particle size $D_{100}$ of $\leq$ 20 mm, preferably $\leq$ 15 mm, more preferably $\leq$ 12 mm, more preferably $\leq$ 10 mm, more preferably $\leq$ 9 mm, more preferably $\leq$ 8 mm, more preferably $\leq$ 7 mm, most preferably $\leq$ 6 mm.

15. The method according to any one of embodiments 1 to 14, wherein the at least one sweetener has a maximum particle size $D_{100}$ in the range of from about 3 mm to about 20 mm, preferably in the range of from about 3 mm to about 15 mm, more preferably in the range of from about 4 mm to about 12 mm, more preferably in the range of from about 5 mm to about 10 mm, more preferably in the range of from about 5 mm to about 9 mm, more preferably in the range of from about 5 mm to about 8 mm, most preferably in the range of from about 5 mm to about 7 mm.

16. The method according to any one of embodiments 1 to 15, wherein the at least one sweetener has an average

particle diameter $D_{50}$ of at least 1.0 mm and a maximum particle diameter $D_{100}$ of $\leq$ 12 mm, preferably an average particle diameter $D_{50}$ of at least 2.0 mm and a maximum particle diameter $D_{100}$ of $\leq$ 10 mm, further preferably an average particle diameter $D_{50}$ of at least 3.0 mm and a maximum particle diameter $D_{100}$ of $\leq$ 9 mm.

17. The method according to any one of embodiments 1 to 16, wherein the at least one sweetener has a water content of at most 10 wt.-%, preferably at most 8 wt.-%, more preferably at most 6 wt.-%, more preferably at most 4 wt.-%, more preferably at most 3 wt.-%, further preferably at most 2 wt.-%, further preferably at most 1.5 wt.-%-, further preferably at most 1 wt.-%, further preferably at most 0.8 wt.-%, further preferably at most 0.6 wt.-%, most preferably at most 0.5 wt.-% based on the total weight of the at least one sweetener.

18. The method according to embodiment 17 wherein the water content is determined by a vacuum method (OICCC) at 70 °C.

19. The method according to any one of embodiments 1 to 18, wherein the at least one sweetener is prepared by roller drying, spray drying or freeze drying, preferably wherein the at least one amorphous sweetener is obtained by roller drying.

20. The method according to any one of embodiments 1 to 19, wherein the at least one sweetener is coated with a coating agent, preferably wherein the coating agent comprises cocoa powder, preferably wherein the coating agent is cocoa powder.

21. The method according to embodiment 20, wherein the coating agent is present in an amount of at least 2 wt.-%, preferably at least 4 wt.-%, more preferably at least 6 wt.-%, more preferably at least 8 wt.-% based on the total combined weight of the at least one sweetener and the coating agent.

22. The method according to any one of embodiments 20 or 21, wherein the coating agent is present in an amount of from about 2 to about 20 wt.-%, preferably of from about 4 to about 18 wt.-%, more preferably of from about 6 to about 17 wt.-%, more preferably of from about 8 to about 16 wt.-%, more preferably of from about 8 to about 15 wt.-%, more preferably of from about 10 wt.-% to about 15 wt.-%, most preferably wherein the coating agent is present in an amount of about 10 wt.-% or of about 15 wt.-% based on the total combined weight of the at least one sweetener and the coating agent.

23. The method according to any one of embodiments 20 to 22, wherein the at least one sweetener is pulp sugar, and wherein the coating agent comprises cocoa powder, and wherein the coating agent is present in an amount of from about 5 wt.-% to about 20 wt.-%, preferably of from about 6 wt.-% to about 17 wt.-%, more preferably of from about 8 wt.-% to about 16 wt.-%, most preferably of from about 10 wt.-% to about 15 wt.-% based on the total combined weight of the at least one sweetener and the coating agent.

24. The method according to any one of embodiments 20 to 23, wherein the at least one sweetener is pulp sugar, and wherein the coating agent is cocoa powder, and wherein the coating agent is present in an amount of from about 5 wt.-% to about 20 wt.-%, preferably of from about 6 wt.-% to about 17 wt.-%, more preferably of from about 8 wt.-% to about 16 wt.-%, most preferably of from about 10 wt.-% to about 15 wt.-% based on the total combined weight of the at least one sweetener and the coating agent.

25. The method according to any one of embodiments 1 to 24, wherein the composition I does not comprise added refined sugar.

26. The method according to any one of embodiments 1 to 25, wherein the composition I, and/or the composition II, and/or the composition III, and/or the composition IV do not comprise added refined sugar.

27. The method according to any one of embodiments 1 to 26, wherein the composition I has a content of fat in a range of from about 10 wt.-% to about 50 wt.-%, preferably of from about 20 wt.-% to about 45 wt.-%, more preferably of from about 25 wt.-% to about 40 wt.-%, further preferably of from about 30 wt.-% to about 40 wt.-%, more preferably of from about 32 wt.-% to about 37 wt.-%, most preferably of from about 34 wt.-% to about 36 wt.-% based on the total weight of the composition I.

28. The method according to any one of embodiments 1 to 27, wherein step iii) comprises crushing particles of the at least one sweetener, wherein the maximum particle size $D_{100}$ of the particles of the at least one sweetener is reduced by at least about 50 %, preferably by at least about 70 %, more preferably by at least about 90 %.

29. The method according to any one of embodiments 2 to 28, wherein step iv) is performed at a pressure of at least 10 bar, preferably at least 15 bar, more preferably at least 20 bar; or at a pressure in the range of from about 10 bar to about 50 bar, preferably of from about 15 bar to about 45 bar, more preferably of from about 20 bar to 45 bar.

30. The method according to any one of embodiments 3 to 29, wherein step v) is performed in a machine comprising at least two rollers, wherein the composition II obtained from step iv) is applied to a first or a second roller or to a first and a second roller, wherein the temperature of the first and second roller is independently in the range of from about 20 °C to about 40 °C, preferably in the range of from about 20 °C to about 35 °C, more preferably in the range of from about 22 °C to about 33 °C, more preferably in the range of from about 24 °C to about 32 °C, preferably in a range of from about 20 °C to about 35 °C, more preferably in a range of from about 22 °C to about 33 °C, more preferably in a range of from about 24 °C to about 32 °C, more preferably in a range of from about 25 °C to about 32 °C, more preferably in a range of from about 25 °C to about 31 °C, most preferably in a range of from about 25 °C to about 30 °C.

31. The method according to any one of embodiments 3 to 30, wherein step v) is performed in a machine comprising at least two rollers, wherein the composition II obtained from step iv) is applied to a first roller, wherein the difference in temperature of the first roller and the temperature of the second roller $\Delta T$ is at most 10 °C, preferably at most 8 °C, more preferably at most 5 °C, most preferably at most 3 °C.

32. The method according to any one of embodiments 3 to 31, wherein step v) is performed in a machine comprising at least two rollers, wherein the composition II obtained from step iv) is applied to a first roller wherein the difference in temperature of the first roller and the temperature of the second roller $\Delta T$ is in the range of from about 0 °C to about 10 °C, preferably in the range of from about 0 °C to about 8 °C, more preferably in the range of from about 0 °C to about 6 °C, more preferably in the range of from about 0 °C to about 5 °C, more preferably in the range of from about 0.5 °C to about 3 °C, most preferably in the range of from about 1 °C to about 3 °C.

33. The method according to any one of embodiments 3 to 32, wherein the composition III comprises ingredients, in particular the at least one sweetener, having a particle size $D_{94}$ of at most 60 $\mu$m, preferably at most 50 $\mu$m, more preferably at most 40 $\mu$m, more preferably at most 30 $\mu$m.

34. The method according to any one of embodiments 3 to 33, additionally comprising a step via) wherein cocoa butter is added to the composition III obtained from step v) to provide a composition IIIa, wherein the composition IIIa preferably has a content of fat in the range of from about 10 wt.-% to about 50 wt.-%, more preferably in the range of from about 25 wt.-% to about 45 wt.-%, more preferably in the range of from about 30 wt.-% to about 40 wt.-%, most preferably in the range of from about 35 wt.-% to about 40 wt.-% based on the total weight of the composition IIIa.

35. The method according to any one of embodiments 4 to 34, wherein, step vi) is performed with the supply of gas, preferably wherein the gas comprises oxygen, further preferably wherein the gas is air.

36. The method according to any one of embodiments 4 to 35, wherein step vi) is performed at a temperature in the range of from about 25 °C to about 80 °C, preferably in a range of from about 30 °C to about 70 °C, more preferably in a range of from about 35 °C to about 60 °C, more preferably in a range of from about 40 °C to about 60 °C, more preferably in a range of from about 40 °C to about 55 °C, more preferably at a temperature in a range of from about 40 °C to about 50 °C, most preferably at a temperature in a range of from about 40 °C to about 45 °C.

37. The method according to any one of embodiments 4 to 36, wherein, step vi) is performed for a period of time in the range of from about 0.5 h to about 24 h, preferably in the range of from about 1 h to about 18 h, more preferably in the range of from about 2 h to about 14 h, more preferably in the range of from about 3 h to about 12 h, more preferably in the range of from about 3 h to about 10 h, more preferably in the range of from about 3.5 h to about 8 h, more preferably in the range of from about 4 h to about 7 h, most preferably in the range of from about 4 h to about 6 h.

38. The method according to any one of embodiments 4 to 37, wherein the conched composition IV is substantially free of agglomerates, in particular substantially free of agglomerates consisting of the at least one sweetener, wherein the agglomerates have a maximum particle size $D_{100}$ of more than 5 mm, preferably more than 4 mm, more preferably more than 3 mm, more preferably more than 2 mm, more preferably more than 1 mm, most preferably more than 0.5 mm.

39. The method according to any one of embodiments 4 to 38, wherein the conched composition IV comprises the agglomerates in an amount of 5 wt.-% or less, preferably in an amount of 2.5 wt.-% or less, more preferably in an amount of 1.5 wt.-% or less, more preferably in an amount of 1 wt.-% or less based on the total weight of the conched composition IV.

40. The method according to any one of embodiments 1 to 39, further comprising a step vii), wherein the composition IV obtained from step v) is stored in a storage tank at a temperature in the range of from about 20 °C to about 60 °C, preferably about 30 °C to about 60 °C, more preferably about 35 °C to about 55 °C, more preferably about 35 °C to about 55 °C, more preferably about 40 °C to about 55 °C, more preferably about 40 °C to about 50 °C, more preferably about 42 °C to about 47 °C, most preferably at about 45 °C.

41. The method according to embodiment 40, wherein the amount of agglomerates in step vii) increases by no more than 10 wt.-%, preferably no more than 5 wt.-%, more preferably no more than 2.5 wt.-%, more preferably no more than 1 wt.-%, relative to the proportion of agglomerates in the conched mass IV in a period of 24 hours.

42. A confectionary product obtained by a method according to any one of embodiments 1 to 41.

43. The confectionary product according to embodiment 42, wherein the confectionary product is a chocolate product or a chocolate substitute product, preferably wherein the confectionary product is a chocolate product or chocolate substitute product according to the requirements of the German Regulation on Cocoa and Chocolate Products of 15 December 2003 (KakaoV 2003).

44. The confectionary product according to any one of embodiments 42 or 43, wherein the confectionary product is a chocolate product selected from the group consisting of milk chocolate, dark chocolate, white chocolate and vegan chocolate.

45. The confectionary product according to any one of embodiments 42 to 44, wherein the confectionary product is a dark chocolate.

46. The confectionary product according to any one of embodiments 42 to 44, wherein the confectionary product is a milk chocolate.

**Claims**

1. A method for manufacture of a confectionary product comprising the steps of

   i) Providing at least one sweetener,
   ii) Providing at least one ingredient from a cocoa bean selected from the group consisting of cocoa mass, cocoa butter, cocoa powder, and mixtures thereof; and
   iii) Mixing components from i) and ii) to form a composition I.

2. The method according to claim 1, further comprising the step of

   iv) pre-refining the composition I obtained from step iii) to result a composition II; and/or
   v) refining the composition I obtained from step iii), or,
   when step iv) is performed, refining the composition II obtained from step iv) to result a composition III.

3. The method according to claim 1 or 2, further comprising the step of
   vi) Conching the composition I obtained from step iii), or,

   when step iv) is performed, conching the composition II obtained from step iv), or,
   when step v) is performed, conching the composition III obtained from step v) to a result a conched composition IV.

4. The method according to any one of the preceding claims, wherein the confectionary product is a chocolate product selected from the group consisting of milk chocolate, dark chocolate, white chocolate, and vegan chocolate.

5. The method according to any one of the preceding claims, wherein the at least one sweetener is selected from the group consisting of a sweetener derived from the cocoa fruit, allulose, polydextrose, soluble corn fiber, super sweeteners, and mixtures thereof.

6. The method according to any one of the preceding claims, wherein the at least one sweetener is an amorphous sweetener, preferably wherein the amorphous sweetener is a sweetener derived from the cocoa fruit, more preferably wherein the sweetener derived from a cocoa fruit is derived from the pulp of the cocoa fruit, more preferably wherein the sweetener derived from a cocoa fruit is a pulp sugar.

7. The method according to any one of the preceding claims, wherein the at least one sweetener has

a) an average particle size $D_{50}$ of at least 0.1 mm, preferably the at least one sweetener has an average particle size $D_{50}$ of at least 0.5 mm, more preferably the at least one sweetener has an average particle size $D_{50}$ of at least 1.0 mm, more preferably the at least one sweetener has an average particle size $D_{50}$ of at least 2.0 mm, more preferably at least 3.0 mm, most preferably at least 4.0 mm; and/or
b) an average particle size $D_{50}$ in the range of from about 0.1 mm to about 10 mm, preferably in the range of from about 0.5 mm to about 8 mm, more preferably in the range of from about 1 mm to about 7 mm, more preferably in the range of from about 2 mm to about 6 mm, more preferably in the range of from about 3 mm to about 6 mm, more preferably in the range of from about 4 mm to about 6 mm, most preferably in the range of from about 4 mm to about 5 mm; and/or
c) a maximum particle size $D_{100}$ of $\leq$ 20 mm, preferably $\leq$ 15 mm, more preferably $\leq$ 12 mm, more preferably $\leq$ 10 mm, more preferably $\leq$ 9 mm, more preferably $\leq$ 8 mm, more preferably $\leq$ 7 mm, most preferably $\leq$ 6 mm; and/or
d) a maximum particle size $D_{100}$ in the range of from about 3 mm to about 20 mm, preferably in the range of from about 3 mm to about 15 mm, more preferably in the range of from about 4 mm to about 12 mm, more preferably in the range of from about 5 mm to about 10 mm, more preferably in the range of from about 5 mm to about 9 mm, more preferably in the range of from about 5 mm to about 8 mm, most preferably in the range of from about 5 mm to about 7 mm; and/or
e) an average particle diameter $D_{50}$ of at least 1.0 mm and a maximum particle diameter $D_{100}$ of $\leq$ 12 mm, preferably an average particle diameter $D_{50}$ of at least 2.0 mm and a maximum particle diameter $D_{100}$ of $\leq$ 10 mm, further preferably an average particle diameter $D_{50}$ of at least 3.0 mm and a maximum particle diameter $D_{100}$ of $\leq$ 9 mm.

8. The method according to any one of the preceding claims, wherein the at least one sweetener has a water content of at most 10 wt.-%, preferably at most 8 wt.-%, more preferably at most 6 wt.-%, more preferably at most 4 wt.-%, more preferably at most 3 wt.-%, further preferably at most 2 wt.-%, further preferably at most 1.5 wt.-%-, further preferably at most 1 wt.-%, further preferably at most 0.8 wt.-%, further preferably at most 0.6 wt.-%, most preferably at most 0.5 wt.-% based on the total weight of the at least one sweetener.

9. The method according to any one of the preceding claims, wherein the at least one sweetener is coated with a coating agent, preferably wherein the coating agent comprises cocoa powder, preferably wherein the coating agent is cocoa powder.

10. The method according to any one of the preceding claims, wherein the coating agent is present

a) in an amount of at least 2 wt.-%, preferably at least 4 wt.-%, more preferably at least 6 wt.-%, more preferably at least 8 wt.-% based on the total combined weight of the at least one sweetener and the coating agent; and/or
b) in an amount of from about 2 to about 20 wt.-%, preferably of from about 4 to about 18 wt.-%, more preferably of from about 6 to about 17 wt.-%, more preferably of from about 8 to about 16 wt.-%, more preferably of from about 8 to about 15 wt.-%, more preferably of from about 10 wt.-% to about 15 wt.-%, most preferably wherein the coating agent is present in an amount of about 10 wt.-% or of about 15 wt.-% based on the total combined weight of the at least one sweetener and the coating agent.

11. The method according to any one of the preceding claims, wherein the at least one sweetener is pulp sugar, and wherein the coating agent comprises cocoa powder, and wherein the coating agent is present in an amount of from about 5 wt.-% to about 20 wt.-%, preferably of from about 6 wt.-% to about 17 wt.-%, more preferably of from about 8 wt.-% to about 16 wt.-%, most preferably of from about 10 wt.-% to about 15 wt.-% based on the total combined weight of the at least one sweetener and the coating agent.

12. The method according to any one of the preceding claims, wherein the composition I has a content of fat in a range of from about 10 wt.-% to about 50 wt.-%, preferably of from about 20 wt.-% to about 45 wt.-%, more preferably of from about 25 wt.-% to about 40 wt.-%, further preferably of from about 30 wt.-% to about 40 wt.-%, more preferably of from about 32 wt.-% to about 37 wt.-%, most preferably of from about 34 wt.-% to about 36 wt.-% based on the total weight of the composition I.

13. The method according to any one of claims 3 to 12, wherein step vi) is performed at a temperature in the range of from about 25 °C to about 80 °C, preferably in a range of from about 30 °C to about 70 °C, more preferably in a range of from about 35 °C to about 60 °C, more preferably in a range of from about 40 °C to about 60 °C, more preferably in a range of from about 40 °C to about 55 °C, more preferably at a temperature in a range of from about 40 °C to about 50 °C, most preferably at a temperature in a range of from about 40 °C to about 45 °C.

14. The method according to any one of claims 3 to 13, wherein, step vi) is performed for a period of time in the range of from about 0.5 h to about 24 h, preferably in the range of from about 1 h to about 18 h, more preferably in the range of from about 2 h to about 14 h, more preferably in the range of from about 3 h to about 12 h, more preferably in the range of from about 3 h to about 10 h, more preferably in the range of from about 3.5 h to about 8 h, more preferably in the range of from about 4 h to about 7 h, most preferably in the range of from about 4 h to about 6 h.

15. A confectionary product obtained by a method according to any one of the preceding claims.

Europäisches
Patentamt

European
Patent Office

Office européen
des brevets

# EUROPEAN SEARCH REPORT

Application Number

EP 22 21 6050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/312791 A1 (DUPAS-LANGLET MARINA [CH] ET AL) 6 October 2022 (2022-10-06) * paragraphs [0015], [0177] – [0183], [0190] – [0194], [0329] – [0338], [0285] – [0289]; claims 1,2,10; examples 1,14,15,20 * | 1-15 | INV. A23G1/40 |
| X | EP 0 667 746 A1 (HERSHEY FOODS CORP [US]) 23 August 1995 (1995-08-23) * paragraphs [0003] – [0005], [0036] – [0041], [0072] – [0074], [0088]; claim 4; figure 2; examples 1-3 * | 1-5, 7-10, 12-15 | |
| X | US 2022/132896 A1 (KANNAR DAVID [SG] ET AL) 5 May 2022 (2022-05-05) * paragraph [0177]; examples 13,19 * | 1,2,4, 7-15 | |
| X | US 5 360 621 A (MENTINK LEON [FR] ET AL) 1 November 1994 (1994-11-01) * column 8, line 4 – column 9, line 50; claims 1,4,15; examples 1-3 * | 1-5,7-15 | |

TECHNICAL FIELDS
SEARCHED (IPC)

A23G

The present search report has been drawn up for all claims

| Place of search | Date of completion of the search | Examiner |
|---|---|---|
| The Hague | 17 May 2023 | Tallgren, Antti |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6050

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2023

| Patent document cited in search report | | | Publication date | Patent family member(s) | | | Publication date |
|---|---|---|---|---|---|---|---|
| US 2022312791 | A1 | | 06-10-2022 | AU | 2020267788 | A1 | 30-09-2021 |
| | | | | CA | 3135952 | A1 | 12-11-2020 |
| | | | | EP | 3962282 | A1 | 09-03-2022 |
| | | | | JP | 2022530746 | A | 01-07-2022 |
| | | | | US | 2022312791 | A1 | 06-10-2022 |
| | | | | WO | 2020225056 | A1 | 12-11-2020 |
| EP 0667746 | A1 | | 23-08-1995 | AU | 5447994 | A | 24-05-1994 |
| | | | | CA | 2147768 | A1 | 11-05-1994 |
| | | | | DE | 69325177 | T2 | 04-11-1999 |
| | | | | EP | 0667746 | A1 | 23-08-1995 |
| | | | | JP | 3653276 | B2 | 25-05-2005 |
| | | | | JP | H08504576 | A | 21-05-1996 |
| | | | | US | 5464649 | A | 07-11-1995 |
| | | | | US | 5709903 | A | 20-01-1998 |
| | | | | WO | 9409649 | A1 | 11-05-1994 |
| US 2022132896 | A1 | | 05-05-2022 | AU | 2020236316 | A1 | 07-10-2021 |
| | | | | CA | 3132035 | A1 | 17-09-2020 |
| | | | | CN | 113825844 | A | 21-12-2021 |
| | | | | EP | 3935197 | A1 | 12-01-2022 |
| | | | | JP | 2022524501 | A | 06-05-2022 |
| | | | | SG | 11202109037R | A | 29-09-2021 |
| | | | | US | 2022132896 | A1 | 05-05-2022 |
| | | | | WO | 2020185156 | A1 | 17-09-2020 |
| US 5360621 | A | | 01-11-1994 | AT | 132326 | T | 15-01-1996 |
| | | | | AU | 654708 | B2 | 17-11-1994 |
| | | | | CA | 2067933 | A1 | 07-11-1992 |
| | | | | DE | 69207259 | T2 | 20-06-1996 |
| | | | | DK | 0512910 | T3 | 05-02-1996 |
| | | | | EP | 0512910 | A2 | 11-11-1992 |
| | | | | ES | 2082399 | T3 | 16-03-1996 |
| | | | | FI | 922030 | A | 07-11-1992 |
| | | | | FR | 2676164 | A1 | 13-11-1992 |
| | | | | GR | 3018605 | T3 | 30-04-1996 |
| | | | | IE | 921391 | A1 | 18-11-1992 |
| | | | | JP | 3224270 | B2 | 29-10-2001 |
| | | | | JP | H05260894 | A | 12-10-1993 |
| | | | | KR | 920021027 | A | 18-12-1992 |
| | | | | NO | 304343 | B1 | 07-12-1998 |
| | | | | US | 5360621 | A | 01-11-1994 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TSCHEUSCHNER, H.-D. et al.** *Zucker- und Süßwarenwirtschaft,* 1993, vol. 46 (12), 580-583